# EUROPEAN PATENT SPECIFICATION

(11) **EP 2 214 902 B1**
(45) Date of publication and mention of the grant of the patent: **19.10.2011**
(21) Application number: 08727050.0
(22) Date of filing: 19.03.2008
(51) Int. Cl.: B32B 17/10, C03C 27/12, B41M 1/30

(54) **HIGH CONTRAST DECORATIVE SHEETS AND LAMINATES**
DEKORATIVE FOLIEN UND LAMINATE MIT HOHEM KONTRAST
FEUILLES ET LAMINÉS DÉCORATIFS À FORT CONTRASTE

(30) Priority: 19.03.2007 US 725710
(43) Date of publication of application: 11.08.2010
(73) Proprietor: E. I. Du Pont de Nemours and Company, Wilmington, DE 19898 (US)
(72) Inventor: SMITH, Rebecca, L., Vienna, West Virginia 26105 (US); PHILLIPS, Thomas, R., Vienna, West Virginia 26105 (US); HAYES, Richard, Allen, Beaumont, Texas 77706 (US)
(74) Representative: Dannenberger, Oliver Andre
(86) International application number: PCT/US2008/003713
(87) International publication number: WO 2008/115568

(56) References cited:
- WO-A-2004/018197
- WO-A-2006/050536
- WO-A-2008/008679
- US-A1- 2003 203 167
- US-A1- 2005 129 954
- US-A1- 2005 215 664
- US-B1- 6 571 497

## Description

### FIELD OF THE INVENTION

The present invention relates to image-bearing articles.

### BACKGROUND OF THE INVENTION

Glass laminated products have contributed to society for almost a century. Beyond the well known, every day automotive safety glass used in windshields, laminated glass is used in all forms of the transportation industry. It is utilized as windows for trains, airplanes, ships, and nearly every other mode of transportation. Safety glass is characterized by high impact and penetration resistance and does not scatter glass shards and debris when shattered.

Safety glass typically consists of a sandwich of two glass sheets or panels bonded together with an interlayer of a polymeric film or sheet, which is placed between the two glass sheets. One or both of the glass sheets may be replaced with optically clear rigid polymeric sheets, such as sheets of polycarbonate materials. Safety glass has further evolved to include multiple layers of glass and polymeric sheets bonded together with interlayers of polymeric films or sheets.

The interlayer is typically made with a relatively thick polymer film or sheet, which exhibits toughness and bondability to provide adhesion to the glass in the event of a crack or crash. Over the years, a wide variety of polymeric interlayers have been developed to produce laminated products. In general, these polymeric interlayers must possess a combination of characteristics including very high optical clarity, low haze, high impact resistance, high penetration resistance, excellent ultraviolet light resistance, good long term thermal stability, excellent adhesion to glass and other rigid polymeric sheets, low ultraviolet light transmittance, low moisture absorption, high moisture resistance, excellent long term weatherability, among other requirements. Widely used interlayer materials utilized currently include complex, multicomponent compositions based on poly(vinyl acetal) (preferably poly(vinyl butyral) (PVB)), polyurethane, polyvinylchloride, linear low density polyethylenes (preferably metallocene-catalyzed), poly(ethylene-co-vinyl acetate), polymeric fatty acid polyamides, polyester resins, such as poly(ethylene terephthalate), silicone elastomers, epoxy resins, elastomeric polycarbonates, ionomers (neutralized ethylene acid copolymer which comprises copolymerized residues of ethylene and copolymerized residues of α,β-unsaturated carboxylic acid) and the like.

A more recent societal need is for image-bearing (e.g., decorated) glass laminates which include an image or decoration. Automotive windshield tint bands, used to help shield the driver's eyes from the sun's glare, may be considered as a form of decorative laminates. These are generally dyed or printed directly onto the automotive windshield interlayer. For example, automotive windshield tint bands are disclosed in; US 3,008,858, US 3,346,526, US 3,441,361, US 3,450,552, US 3,973,058, US 4,303,718, US 4,341,683 and JP 2053298. Decorative window films are disclosed within the art in, for example, US 5,049,433, US 5,468,532, US 5,505,801, and WO 83/03800. As is well known within the art, window films are subject to environmental stresses within their normal usage and tend to delaminate over time.

Decorative (image-bearing) glass laminates have been produced through the incorporation of image-bearing films as described in, for example, US 6,824,868, US 2002/0119306, EP 160 510, EP 1 129 844, DE 29706880 and DE 20100717. US 2003/0203167 and WO 03/092999 disclose the incorporation of image-bearing white films to form high contrast glass laminates. Such embedded film image-bearing laminates may suffer from inefficient processes and/or low interlayer adhesion, which significantly degrades their utility as safety glass.

Glass laminates which incorporate image-bearing glass are known within the art. For example, Wachtel, in US Kapp, et. al., in US 2006/0191625, disclose a glass decorated with a crosslinkable thermoset resin with pigments and glass laminates produced therefrom with poly(vinyl butyral) interlayers.

Image-bearing glass laminates derived from printed interlayers are known within the art. For example, Cesar, in US 4,968,553, discloses an image-bearing polyurethane interlayer for use in glass laminates. Image-bearing poly(vinyl butyral) sheets for glass laminates have been produced through transfer printing processes. See, for example, US 4,173,672, US 4,976,805, US 5,364,479, US 5,487,939, US 6,235,140, WO 95/06564 and WO 2004/039607. Sol, et. al., in US 5,914,178, disclose glass laminates which include silk screen image-bearing poly(vinyl butyral) interlayers. Roman, et. al., in US 7,041,163, disclose an inkjet ink set comprising a plurality of non-aqueous, colored, pigmented inks suitable for ink jet printing poly(vinyl butyral) interlayers. Reynolds, et. al., in US 2004/0234735 and WO 02/18154, disclose a method of producing image carrying laminated materials. Smith, et. al., in WO 2004/011271, disclose a process for ink-jet printing an image onto a rigid thermoplastic interlayer. Elwakil, et. al., in WO 2004/018197, disclose a process for obtaining an image-bearing laminate having a laminate adhesive strength of at least 1000 psi, which includes ink jet printing a digital image onto a thermoplastic interlayer selected from polyvinyl butyrals, polyurethanes, polyethylenes, polypropylenes, polyesters, and EVA using certain pigmented inks.

As is discussed above, improvements sought in the art include remedies for undesirable low contrast and reduced sharpness of the image due to the high transparency of the image-bearing interlayer and the laminates produced therefrom. There is a need for an image-bearing (e.g., decorated) laminate with high image contrast and sharpness. Preferably, these laminates also maintain the safety aspects generally assumed for laminated safety glass.

### SUMMARY OF THE INVENTION

Described herein is an image-bearing article comprising a poly(ethylene-co-vinyl acetate) or poly(vinyl butyral) interlayer bearing an image and further comprising an opaque layer.

Preferably the image-bearing interlayer is an image-bearing poly(vinyl butyral) interlayer.

The image-bearing interlayer is coated on the image-bearing side and over the image with an adhesion promoter.

Preferably the adhesion promoter is selected from the group consisting of silane and poly(alkyl amine) adhesion promoters, and mixtures thereof.

In one preferred embodiment, the adhesion promoter is an aminosilane.

In another preferred embodiment, the adhesion promoter is selected from the group consisting of poly(vinyl amine), poly(allyl amine) and mixtures thereof.

Preferred silane adhesion promoters are selected from the group consisting of vinyltriethoxysilane, vinyltrimethoxysilane, vinyltris(betamethoxyethoxy)silane, gamma-methacryloxypropyltrimethoxysilane, beta(3,4-epoxycyclohexyl)ethyltrimethoxysitane, gammaglycidoxypropyltrimethoxysilane, gammaglycidoxypropylmethyidiethoxysilane, vinyl-triacetoxysilane, gammamercaptopropyltrimethoxysilane, (3-aminopropyl)trimethoxysilane, (3-aminopropyl)triethoxysilane, N-beta-(aminoethyl)-gamma-aminopropyltrimethoxysilane, N-(beta-aminoethyl) gammaaminopropylmethyldimethoxysilane, aminoethylaminopropyl silane triol homopolymer, vinylbenzylaminoethylaminopropyltrimethoxysilane, bis(trimethoxysilylpropyl)amine, and mixtures thereof.

The more preferred aminosilane adhesion promoters are selected from the group consisting of (3-aminopropyl)trimethoxysilane, (3-aminopropyl)triethoxysilane, N-beta-(aminoethyl)-gamma-aminopropyltrimethoxysilane, N-(beta-aminoethyl) gammaaminopropylmethyldimethoxysilane, aminoethylaminopropyl silane triol homopolymer, vinylbenzylaminoethylaminopropyltrimethoxysilane, bis(trimethoxysilylpropyl)amine, and mixtures thereof.

The most preferred aminosilane adhesion promoters are selected from the group consisting of gamma-aminopropyltriethoxysilane, and N-beta-(aminoethyl)-gamma-aminopropyl-trimethoxysilane and mixtures thereof.

Preferably the adhesion coating has a thickness of less than 1 mil.

Preferably the opaque layer is selected from the group consisting of white film, white sheet, white rigid sheet, frosted glass sheet, and etched glass sheet, more preferably is a white layer and most preferably is a white film.

The opaque layer has total luminous transmission of less than about 70 percent; preferably less than about 50 percent; more preferably less than about 30 percent; yet more preferably less than about 10 percent; and most preferably less than about 1 percent.

In a preferred embodiment, the image is applied through an ink jet process.

In a preferred embodiment, the image comprises UV-curable ink.

In a preferred embodiment, the image comprises pigment ink.

In a preferred embodiment, the pigment ink comprises pigment selected from the group consisting of Color Index PY120, PY155, PY128, PY180, PY95, PY93, PV19/PR202, PB15:3, PB15:4, PR122, PB17 and mixtures thereof.

In a preferred embodiment, the ink further comprises a black ink, preferably a carbon black ink.

In a preferred embodiment, the ink further comprises a white ink.

Preferably the image is formed from solvent-based ink.

Preferably the image-bearing article has a laminate adhesive strength of about 1000 psi or greater.

In one preferred embodiment, the image-bearing article further comprises a white or another colored layer laminated to the image-bearing interlayer sheet.

Also described herein is an image-bearing article comprising: (a) a first rigid sheet, wherein the rigid sheet is selected from the group consisting of glass, poly(carbonate), and poly(methacrylate) sheets; (b) a first polymeric interlayer sheet bearing an image selected from the group consisting of poly(vinyl butyral) sheets and poly(ethylene-co-vinyl acetate) sheets wherein preferably the image-bearing interlayer sheet is coated on the image-bearing side and over the image with an adhesion promoter selected from the group consisting of aminosilane, poly(vinyl amine), poly(allyl amine) and mixtures thereof, laminated to the rigid layer; (c) an opaque layer laminated to the image-bearing polymeric interlayer, wherein the opaque layer is preferably a white layer is selected from the group consisting of white film, white sheet, white rigid sheet, frosted glass sheet, and etched glass sheet; (d) a second polymeric interlayer sheet laminated to the opaque layer, wherein the polymeric interlayer sheet is selected from the group consisting of poly(vinyl butyral) sheets and poly(ethylene-co-vinyl acetate) sheets; and (e) a second rigid sheet laminated to the polymeric interlayer sheet, wherein the second rigid sheet is selected from the group consisting of glass, poly(carbonate), and poly(methacrylate) sheets. Preferably the white layer is a white film, the first and second rigid sheets are glass sheets and the first and second polymeric interlayer sheets are poly(vinyl butyral) sheets.

The invention is also directed to an image-bearing article comprising: (a) a rigid sheet, wherein the rigid sheet is selected from the group consisting of glass, poly(carbonate), and poly(methacrylate) sheets; (b) a polymeric interlayer sheet bearing an image selected from the group consisting of poly(vinyl butyral) sheets and poly(ethylene-co-vinyl acetate) sheets wherein preferably the image-bearing interlayer sheet is coated on the image-bearing side and over the image with an adhesion promoter selected from the group consisting of aminosilane, poly(vinyl amine), poly(allyl amine) and mixtures thereof, laminated to the rigid layer, and (c) a white layer laminated to the image-bearing polymeric interlayer, wherein the white layer is selected from the group consisting white film, white sheet, white rigid sheet, frosted glass sheet, and etched glass sheet. Preferably the white layer is a white film, the rigid sheet is a glass sheets and the polymeric interlayer sheet is poly(vinyl butyral) sheets.

### DETAILED DESCRIPTION OF THE INVENTION

Unless otherwise defined, all technical and scientific terms used herein have the same meaning as commonly understood by one of ordinary skill in the art to which this invention belongs. In case of conflict, the present specification, including definitions, will control.

Although methods and materials similar or equivalent to those described herein can be used in the practice or testing of the invention, suitable methods and materials are described herein.

Unless stated otherwise, all percentages, parts, ratios, etc., are by weight.

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

When the term "about" is used in describing a value or an end-point of a range, the disclosure should be understood to include the specific value or end-point referred to.

As used herein, the terms "comprises," "comprising," "includes," "including," "containing," "characterized by," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified in the claim, closing the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" limits the scope of a claim to the specified materials or steps and those that do not materially affect the basic and novel characteristic(s) of the claimed invention. "A 'consisting essentially of claim occupies a middle ground between closed claims that are written in a 'consisting of format and fully open claims that are drafted in a 'comprising' format."

Where applicants have defined an invention or a portion thereof with an open-ended term such as "comprising," it should be readily understood that (unless otherwise stated) the description should be interpreted to also describe such an invention using the terms "consisting essentially of" or "consisting of."

The articles "a" or "an" are employed to describe elements and components of the invention. This is done merely for convenience and to give a general sense of the invention. This description should be read to include one or at least one and the singular also includes the plural unless it is obvious that it is meant otherwise.

In describing certain polymers it should be understood that sometimes applicants are referring to the polymers by the monomers used to make them or the amounts of the monomers used to make them. While such a description may not include the specific nomenclature used to describe the final polymer or may not contain product-by-process terminology, any such reference to monomers and amounts should be interpreted to mean that the polymer is made from those monomers or that amount of the monomers, and the corresponding polymers and compositions thereof.

The materials, methods, and examples herein are illustrative only and, except as specifically stated, are not intended to be limiting.

The invention is based upon the discovery that it is possible to prepare high contrast image-bearing glass laminates from certain image-bearing polymeric interlayers and certain white or another colored layers produced through an ink jet printing process with superior image sharpness and interlayer adhesion, desirably maintaining the safety aspects commonly associated with safety glass.

Described herein is an article comprising an image-bearing interlayer. The image is applied through an ink jet printing process and has a coating of an adhesion promoter which is in direct contact with the image. The article also comprises an opaque layer suitable for use in safety glass laminate structures.

### Polymeric Interlayer Sheet

The polymeric interlayer sheet preferably has a total thickness of about 10 to about 250 mils (0.25 - 6.35 mm), or more preferably, about 15 to about 90 mils (0.38 - 2.28 mm), or most preferably, about 30 to about 60 mils (0.76 - 1.52 mm) to ensure adequate penetration resistance commonly regarded as a feature of safety laminates.

The polymeric interlayer sheets may be formed by any process known in the art, such as extrusion, calendering, solution casting or injection molding. The parameters for each of these processes can be easily determined by one of ordinary skill in the art depending upon viscosity characteristics of the polymeric material and the desired thickness of the sheet.

The sheet is preferably formed by extrusion.

The polymeric interlayer sheet may have a smooth surface. Preferably, the polymeric sheet to be used as an interlayer within laminates has a roughened surface to effectively allow most of the air to be removed from between the surfaces of the laminate during the lamination process. This can be accomplished, for example, by mechanically embossing the sheet after extrusion or by melt fracture during extrusion of the sheet and the like.

The polymeric interlayer sheet may be combined with other polymeric materials during extrusion and/or finishing to form laminates or multilayer sheets with improved characteristics. A multilayer or laminate sheet may be made by any method known in the art, and may have as many as five or more separate layers joined together by heat, adhesive and/or tie layer, as known in the art. One of ordinary skill in the art will be able to identify appropriate process parameters based on the polymeric composition and process used for sheet formation.

The interlayer sheet properties may be further adjusted by adding certain additives and fillers to the polymeric composition, such as colorants, dyes, plasticizers, lubricants antiblock agents, slip agents, and the like. The interlayer sheets may be further modified to provide valuable attributes to the sheets and to the laminates produced therefrom. For example, the sheets may be treated by radiation, for example E-beam treatment of the sheets. E-beam treatment of the sheets with an intensity in the range of about 2 MRd to about 20 MRd will provide an increase in the softening point of the sheet (Vicat Softening Point) of about 20°C to about 50°C. Preferably, the radiation intensity is from about 2.5 MRd to about 15 MRd.

It is understood that the compositions may be used with additives known within the art. The additives may include, for example, plasticizers, processing aides, flow enhancing additives, lubricants, pigments, dyes, flame retardants, impact modifiers, nucleating agents to increase crystallinity, antiblocking agents such as silica, thermal stabilizers, UV absorbers, UV stabilizers, dispersants, surfactants, chelating agents, coupling agents, adhesives, primers and the like. For example, typical colorants may include a bluing agent to reduce yellowing, a colorant may be added to color the laminate or control solar light. The compositions can contain infrared absorbents, such as inorganic infrared absorbents, for example indium tin oxide nanoparticles and antimony tin oxide nanoparticles, and organic infrared absorbents, for example polymethine dyes, amminium dyes, imminium dyes, dithiolene-type dyes and phthalocyanine-type dyes and pigments.

The compositions can contain an effective amount of a thermal stabilizer. Thermal stabilizers are well disclosed within the art. Any known thermal stabilizer will find utility. Preferable general classes of thermal stabilizers include phenolic antioxidants, alkylated monophenols, alkylthiomethylphenols, hydroquinones, alkylated hydroquinones, tocopherols, hydroxylated thiodiphenyl ethers, alkylidenebisphenols, O-, N- and S-benzyl compounds, hydroxybenzylated malonates, aromatic hydroxybenzyl compounds, triazine compounds, aminic antioxidants, aryl amines, diaryl amines, polyaryl amines, acylaminophenols, oxamides, metal deactivators, phosphites, phosphonites, benzylphosphonates, ascorbic acid (vitamin C), compounds which destroy peroxide, hydroxylamines, nitrones, thiosynergists, benzofuranones, indolinones, and the like and mixtures thereof. This should not be considered limiting. Essentially any thermal stabilizer known within the art can be used. The compositions preferably incorporate from about 0 to about 1.0 weight % thermal stabilizers, based on the total weight of the composition.

The compositions can contain an effective amount of UV absorber(s). UV absorbers are well disclosed within the art. Any known UV absorber can be used. Preferable general classes of UV absorbers include benzotriazoles, hydroxybenzophenones, hydroxyphenyl triazines, esters of substituted and unsubstituted benzoic acids, and the like and mixtures thereof. This should not be considered limiting. Essentially any UV absorber known within the art can be used. The compositions preferably contain from about 0 to about 1.0 weight % UV absorbers, based on the total weight of the composition.

The compositions may contain an effective amount of hindered amine light stabilizers (HALS). Hindered amine light stabilizers (HALS) are generally well disclosed within the art. Generally, hindered amine light stabilizers are disclosed to be secondary, tertiary, acetylated, N-hydrocarbyloxy substituted, hydroxy substituted N-hydrocarbyloxy substituted, or other substituted cyclic amines which further contain steric hindrance, generally derived from aliphatic substitution on the carbon atoms adjacent to the amine function. This should not be considered limiting. Essentially any hindered amine light stabilizer known within the art can be used. The compositions preferably contain from about 0 to about 1.0 weight % hindered amine light stabilizers, based on the total weight of the composition.

The image-bearing interlayers are selected from the group consisting of poly(ethylene-co-vinyl acetate) interlayer sheets and poly(vinyl butyral) interlayer sheets. Preferably the image-bearing interlayers are selected from the group consisting of poly(vinyl butyral) sheets.

The poly(ethylene-co-vinyl acetate) preferably has a vinyl acetate level of about 10 to about 50 weight %, more preferably about 20 to about 40 weight %, most preferably about 25 to about 35 weight %, based on the weight of the total copolymer. The poly(ethylene-co-vinyl acetate) can contain other unsaturated comonomers, such as (meth)acrylate esters, for example; methyl (meth)acrylate, isopropyl (meth)acrylate, butyl (meth)acrylate, glycidyl methacrylate, acrylic acid, methacrylic acid and the like and mixtures thereof. Preferred is ethylene vinyl acetate, most preferably containing about 25 to about 35 weight % vinyl acetate, based on the weight of the copolymer. The poly(ethylene-co-vinyl acetate) composition may contain additives, such as thermal stabilizers, UV absorbers, UV stabilizers, plasticizers, organic peroxides, adhesion promoters and the like and mixtures thereof.

The poly(ethylene-co-vinyl acetate) composition preferably-contains an organic peroxide. Preferably, the organic peroxide has a thermal decomposition temperature of about 70°C or greater in a half-life of 10 hours. Preferably, the organic peroxide has a thermal decomposition temperature of about 100°C or greater. Alternatively, the poly(ethylene-co-vinyl acetate) may be cured by light. In this instance, the organic peroxide may be replaced with a photoinitiator or photosensitizer.

The poly(ethylene-co-vinyl acetate) compositions may also contain a silane coupling agent to enhance the adhesive strengths. Specific examples of the preferable silane coupling agent may include, for example, gamma-chloropropylmethoxysilane, vinyltriethoxysilane, vinyltris(beta-methoxyethoxy)silane, gammamethacryloxypropylmethoxysilane, vinyltriacetoxysilane, gammaglycidoxypropyltrimethoxysilane, gamma-glycidoxypropyltriethoxysilane, beta-(3,4-epoxycyclohexyl)ethyltrimethoxysilane, vinyltrichlorosilane, gamma-mercaptopropylmethoxysilane, gammaaminopropyltriethoxysilane, N-beta-(aminoethyl)-gammaaminopropyltrimethoxysilane, and the like, and mixtures thereof. These silane coupling agent materials are preferably used at a level of about 5 weight % or less, based on the total weight of the poly(ethylene-co-vinyl acetate) composition. These silane coupling agent materials are more preferably used at a level within the range of from about 0.001 weight % to about 5 weight %, based on the total weight of the poly(ethylene-co-vinyl acetate) composition.

The poly(ethylene-co-vinyl acetate) compositions can be formed into polymeric sheets through known processes.

Suitable poly(ethylene-co-vinyl acetate) sheets and poly(vinyl butyral) sheets are commonly known articles of commerce. For example, poly(ethylene-co-vinyl acetate) sheets can be obtained from the Bridgestone Americas Holding, Inc. (Chicago, IL), under the tradename Evasafe® and Specialized Technologies Resources, Inc, (Enfield, CT). Poly(vinyl butyral) sheets are available under the tradename Butacite® from DuPont.

Poly(vinyl butyral) is a more preferred polymeric interlayer sheet material. The poly(vinyl butyral) will preferably have a weight average molecular weight range of from about 30,000 to about 600,000, more preferably of from about 45,000 to about 300,000, and most preferably from about 200,000 to 300,000, as measured by size exclusion chromatography using low angle laser light scattering. The preferable poly(vinyl butyral) material comprises, on a weight basis, about 5 to about 30 %, preferably about 11 to about 25 %, and more preferably about 15 to about 22 % hydroxyl groups calculated as polyvinyl alcohol (PVOH). In addition, the preferable poly(vinyl butyral) material will contain about 0 to about 10 %, preferably about 0 to about 3 % residual ester groups, calculated as polyvinyl ester, typically acetate groups, with the balance being butyraldehyde acetal. The poly(vinyl butyral) may contain a minor amount of acetal groups other than butyral, for example, 2-ethyl hexanal, as disclosed within US 5,137,954.

The preferable poly(vinyl butyral) material contains plasticizer and the amount depends on the specific poly(vinyl butyral) resin and the properties desired in the application. Usable plasticizers are known within the art, for example, as disclosed within US 3,841,890, US 4,144,217, US 4,276,351, US 4,335,036, US 4,902,464, US 5,013,779, and WO 96/28504. Plasticizers commonly employed are esters of a polybasic acid or a polyhydric alcohol. Particularly suitable plasticizers are triethylene glycol di-(2-ethyl butyrate), triethylene glycol di-2-ethylhexanoate, triethylene glycol di-n-heptanoate, oligoethylene glycol di-2-ethylhexanoate, tetraethylene glycol di-n-heptanoate, dihexyl adipate, dioctyl adipate, mixtures of heptyl and nonyl adipates, dibutyl sebacate, tributoxyethylphosphate, isodecylphenylphosphate, triisopropylphosphite, polymeric plasticizers such as the oil-modified sebacid alkyds, and mixtures of phosphates and adipates, and adipates and alkyl benzyl phthalates. Preferable plasticizers include diesters of polyethylene glycol such as triethylene glycol di(2-ethylhexanoate), tetraethylene glycol diheptanoate and triethylene glycol di(2-ethylbutyrate) and dihexyl adipate. Generally about 15 to about 80 parts of plasticizer per hundred parts of resin, preferably about 25 to about 45 parts of plasticizer per hundred parts of resin are used. Preferably, the plasticizer is one that is compatible (that is, forms a single phase with the poly(vinyl butyral) resin) in the amounts described hereinabove with a poly(vinyl butyral) having a hydroxyl number (OH number) of from about 15 to about 23.

An adhesion control additive, for, for example, controlling the adhesive bond between the glass rigid layer and the polymeric sheet, may also be utilized. These are generally alkali metal or alkaline earth metal salts of organic and inorganic acids. Preferably, they are alkali metal or alkaline earth metal salts of organic carboxylic acids having from 2 to 16 carbon atoms. More preferably, they are magnesium or potassium salts of organic carboxylic acids having from 2 to 16 carbon atoms. The adhesion control additive is typically used in the range of about 0.001 to about 0.5 weight % based on the total weight of the polymeric sheet composition. Other additives, such as antioxidants, ultraviolet absorbers, ultraviolet stabilizers, thermal stabilizers, colorants and the like, such as described above and within US 5,190,826, may also be added to the poly(vinyl butyral) composition.

### Imaging Process

The image (e.g., decoration) may be applied to the interlayer sheet by any known method. Such methods may include, for example; air-knife, printing, painting, Dahlgren, gravure, spraying, thermal transfer print printing, silk screen, thermal transfer, inkjet printing or other art processes. Preferably, the image is applied to the interlayer sheet through digital ink jet printing processes. The image can include, for example, an image, symbol, geometric pattern, photograph, alphanumeric character, and the like and combinations thereof. Such ink jet processes provide the speed and flexibility to meet the needs for producing limited quantities of customized image-bearing layers and laminates at a reasonable cost, which are not available through other, more complex printing processes, such as thermal transfer printing. Inkjet is the dominant print technology in many markets, including desktop publishing and digital photography and is continuing to expand into other areas, such as textile and fabric printing. A major advantage of digital ink jet printing is the minimal setup times required to produce an image which reduces both the cost and turnaround time for a short, customized image production, especially when compared to traditional screen printing operations.

Inkjet printing is typically a wet-imaging, non-contact process where a vehicle or carrier fluid is energized to "jet" ink components from a printhead over a small distance onto a substrate. The vehicle may be solvent based, aqueous based, or a combination thereof and may contain dyes, pigments or a combination thereof. Along with the colorant, an inkjet ink formulation may contain humectants, surfactants, biocides, and penetrants along with other ingredients. Inkjet technologies include continuous and drop-on-demand types, with the drop-on-demand printing the most common. Inkjet printheads generally fall within two broad categories; thermal printheads, mainly used with aqueous inks and piezo-electric printheads, mainly used with solvent inks. Inkjet printer resolutions can now exceed 1440 dpi with photographic and continuous capabilities. Preferably, the image is printed onto the image-bearing layer using a piezo-electric drop-on-demand digital printing process.

A wide array of color options are commercially available for ink jet printing including the standard cyan, magenta, yellow and black (C-M-Y-K) process colors as well as spot color options such as white, metallics, fluorescents, and specialized colors. The term "color", as used in the context of ink formulations, includes all colors including black and white.

The ink colorants are preferably pigments because of their well-known advantage in fade resistance when exposed to sunlight (color fastness) and their ability to be unaffected by the aggressive plasticizers commonly incorporated within the interlayer sheets (providing enhanced image definition) when compared to dyes. Pigments are further preferred because of their thermal stability, edge definition, and low diffusivity on the printed substrate. In conventional practice, the pigment is suspended in a liquid medium that is conventionally referred to as the "vehicle". Pigments suitable for use in the image-bearing article can be dispersed in an aqueous or a non-aqueous vehicle. The ink can comprise a colorant that is dispersed (pigment) in the ink vehicle. The ink vehicle can be aqueous, non-aqueous and the ink is referred to as aqueous or non-aqueous ink, accordingly. Aqueous ink is advantageous because water is especially environmentally friendly.

Preferably, the process uses a solvent based ink system. The term "solvent based ink system" refers to a system in which a colorant is carried in a suitable organic solvent or mixture of solvents, for example, a pigment is dispersed in an organic solvent or mixture of solvents. Such inks include the so called "oil based" inks.

Dispersion of pigment in non-aqueous vehicle is substantially different than dispersion in aqueous vehicle. Generally, pigments that can be dispersed well in water do not disperse well in non-aqueous solvent, and vice versa. Also, the demands of inkjet printing are quite rigorous and the standards of dispersion quality are high. While pigments may be "well dispersed" for other applications, they may still be inadequately dispersed for inkjet applications.

Preferably, the ink set comprises at least three different, non-aqueous, colored pigmented inks (CMY), at least one of which is a magenta ink, at least one of which is a cyan ink, and at least one of which is a yellow ink dispersed in a non-aqueous vehicle. To provide high image definition and resolution within the aggressive plasticizer environment typical of poly(vinyl butyral) interlayers, the pigments are preferably plasticizer resistant. By plasticizer resistant, it is meant that the pigments are only slightly affected or preferably unaffected when placed in contact with the poly(vinyl butyral) plasticizers, allowing for the avoidance of the shortcomings of the image fading or losing resolution (image sharpness) throughout the normal product lifetime.

More preferably, the yellow pigment is chosen from the group consisting of Color Index PY120, PY155, PY128, PY180, PY95, PY93 and mixtures thereof. Even more preferably, the yellow pigment is Color Index PY120. A commercial example is PV Fast Yellow H2G (Clariant Corporation, Charlotte, NC). This pigment has the advantageous color properties of favorable hue angle, good chroma, and light fastness and further disperses well in non-aqueous vehicle. Even more preferably, the magenta ink comprises a complex of PV19 and PR202 (also referred to as PV19/PR202) dispersed in a non-aqueous vehicle. A commercial example is Cinquasia Magenta RT-255-D (Ciba Specialty Chemicals Corporation, Tarrytown, NY). As noted above, the pigment particles can be an intimate complex of the PV19 and PR202 species and not simply a physical mixture of the individual PV19 and PR202 crystals. This pigment has the advantageous color properties of quinacridone pigments such as PR122 with favorable hue angle, good chroma, and light fastness and further disperses well in non-aqueous vehicle. In contrast, PR122 pigment does not disperse well under similar conditions. Also preferred is a cyan ink comprising PB 15:3 and/or PB 15:4 dispersed in a non-aqueous vehicle. Other preferable pigments include, for example, PR122 and PB17. The above noted pigment designations are color index numbers.

Preferably, the ink set further comprises a non-aqueous, pigmented black ink, preferably comprising a carbon black pigment dispersed in a non-aqueous vehicle. More preferably, the ink set comprises at least four inks (CMYK). Preferably, the ink set further comprises a non-aqueous, pigmented white ink dispersed in a non-aqueous vehicle. The ink set may comprise a greater number of inks, with 6 inks and 8 inks being common.

This ink set is advantageous because of the desirable combination of plasticizer resistance, chroma, transparency, light fastness and dispersion quality.

The percent coverage of the image is determined by the number of inks utilized within a particular ink set and is defined as it is defined within the art. This includes the option for multistrikes on the same area. Generally this provides for up to 100 % coverage on the interlayer sheet for each ink used within a certain ink set. For example, if the ink set includes three inks, then up to 300 % coverage is possible. As a further example, if the ink set includes four inks, then up to 400 % coverage is possible.

As described above, the preferable colorant in the inks of the ink set is a pigment. By definition, pigments do not form (to a significant degree) a solution in the vehicle and must be dispersed. Traditionally, pigments are stabilized to dispersion by dispersing agents, such as polymeric dispersants or surfactants. More recently, so-called "self-dispersible" or "self-dispersing" pigments ("SDP(s)") have been developed. As the name would imply, SDPs are dispersible in a vehicle without added dispersants.

Further pigments for inkjet applications are generally well known. A representative selection of such pigments are found, for example, in US 5,026,427, US 5,086,698, US 5,141,556, US 5,169,436 and US 6,160,370, the disclosures of which are incorporated by reference herein for all purposes as if fully set forth. The exact choice of pigment will depend upon color reproduction and print quality requirements of the application.

Dispersants to stabilize the pigments to dispersion are preferably polymeric because of their efficiency. The dispersant can be a random or structured polymeric dispersant. Preferred random polymers include acrylic polymers and styrene-acrylic polymers. More preferable, the dispersant is a structured dispersant such as, for example, AB, BAB and ABC block copolymers, branched polymers and graft polymers. Useful structured polymers are disclosed in, for example, US 5,085,698, EP-A-0556649 and US 5,231,131.

Suitable pigments also include "self-dispersible" or "self-dispersing" pigment(s) (hereinafter "SDP(s)"). SDPs for aqueous inks are well known. SDPs for non-aqueous inks are also known and include, for example, those described in US 5,698,016, US 2001003263, US 2001004871, US 20020056403 and WO 01/94476, the disclosures of which are incorporated by reference herein for all purposes as if fully set forth. The techniques described therein could be applied to the pigments of the invention.

It is desirable to use small pigment particles for maximum color strength and good jetting. The particle size may generally be in the range of from about 0.005 micron to about 15 microns, is typically in the range of from about 0.005 to about 1 micron, is preferably from about 0.005 to about 0.5 micron, and is more preferably in the range of about 0.01 to about 0.3 micron.

The levels of pigment employed in the inks are those levels that are typically needed to impart the desired optical density to the printed image. Typically, pigment levels are in the range of from about 0.01 to about 10 weight %, based on the total weight of the ink.

"Non-aqueous vehicle" refers to a vehicle that is substantially comprised of a non-aqueous solvent or mixtures of such solvent, which solvents can be polar and/or nonpolar. Examples of polar solvents include, for example, alcohols, esters, ketones and ethers, particularly mono- and di-alkyl ethers of glycols and polyglycols such as monomethyl ethers of mono-, di- and tri-propylene glycols and the mono-n-butyl ethers of ethylene, diethylene, and triethylene glycols. Useful, but less preferred, polar solvents include, for example, methyl isobutyl ketone (MIBK), methyl ethyl ketone (MEK), butyrolactone, and cyclohexanone. Examples of nonpolar solvents include, for example, aliphatic and aromatic hydrocarbons having at least six carbon atoms and mixtures thereof including refinery distillation products and byproducts.

Even when no water is deliberately added to the non-aqueous vehicle, some adventitious water may be carried into the formulation, but generally this will be no more than about 2 to about 4 weight %. By definition, the non-aqueous ink will have no more than about 10 weight %, and preferably no more than about 5 weight %, of water based on the total weight of the non-aqueous vehicle.

In a preferred embodiment, dipropylene glycol monomethyl ether acetate (DPMA) is the primary solvent used to disperse the pigmented ink. Mixtures of DPMA with glycol ethers are also preferred.

The amount of the vehicle in the ink is typically in the range of about 70 weight % to about 99.8 weight %, and preferably about 80 weight % to about 99.8 weight %, based on the total weight of the ink.

The inks may optionally contain one or more other ingredients such as, for example, surfactants, binders, bactericides, fungicides, algicides, sequestering agents, buffering agents, corrosion inhibitors, light stabilizers, anti-curl agents, thickeners, and/or other additives and adjuvants well know within the relevant art. These other ingredients may be formulated into the inks and used in accordance with this invention, to the extent that such other ingredients do not interfere with the stability and jetability of the ink, which may be readily determined by routine experimentation. The inks may be adapted by these additives to the requirements of a particular inkjet printer to provide an appropriate balance of properties such as, for example, viscosity and surface tension, and/or may be used to improve various properties or functions of the inks as needed. The amount of each ingredient must be properly determined, but is typically in the range of about 0 to about 15 weight % and more typically about 0 to about 10 weight %, based on the total weight of the ink.

Surfactants may be used and useful examples include ethoxylated acetylene diols, ethoxylated primary and secondary alcohols, sulfosuccinates, organosilicones and fluoro surfactants. Surfactants, if used, are typically in the amount of about 0.01 to about 5 weight % and preferably about 0.2 to about 2 weight %, based on the total weight of the ink.

Binders may also be used and can be soluble or dispersed polymer(s) added to the ink to improve the adhesion of a pigment. Examples of polymers that can be used include, for example, polyesters, polystyrene/acrylates, sulfonated polyesters, polyurethanes, polyimides, polyvinyl pyrrolidone/vinyl acetate (PVP/VA), polyvinyl pyrrolidone (PVP), and the like and mixtures thereof. Other binders are conventionally known and can be used herein. When present, binders are used at levels of at least about 0.3 weight %, preferably at least about 0.6 weight % based on the total weight of the ink. The upper limits are dictated by ink viscosity or other physical limitations.

In a preferred embodiment, the ink is UV curable. UV curable inksets provide the desirability of being less sensitive to interlayer sheet components, such as the poly(vinyl butyral) plasticizer, providing long term stability of the image. They further reduce or eliminate the need for special treatments or coatings to the image-bearing layer prior to the application of the image to enhance the ink receptiveness. The solvents may also be comprised in part, or entirely, of polymerizable solvents, such as solvents which cure upon application of actinic radiation (actinic radiation curable) or UV light (UV curable). Specific examples of the radically polymerizable monomers and oligomers which may serve a components within such reactive solvent systems include, for example; vinyl monomers (meth)acrylate esters, styrene, vinyltoluene, chlorostyrene, bromostyrene, vinyl acetate, N-vinylpyrrolidone (meth)acrylonitrile, allyl alcohol, maleic acid, maleic anhydride, maleimide, N-methylmaleimide (meth)acrylic acid, itaconic acid, polyethylene glycol mono(meth)acrylate, glycidyl (meth)acrylate, ethylene glycol di(meth)acrylate, trimethylolpropane tri(meth)acrylate, mono(2-(meth)acryloyloxyethyl) acid.phosphate, prepolymers having at least one

(meth)acryloyl group, polyester (meth)acrylates, polyurethane (meth)acrylates, epoxy(meth)acrylates, polyether (meth)acrylates, oligo(meth)acrylates, alkyd (meth)acrylates, polyol (meth)acrylates, unsaturated polyesters, and the like and mixtures thereof. This should not be taken as limiting. Any radically curable monomer system can be used in the invention.

Preferably, the actinic radiation-curable composition contains a minor amount of a photoinitiator which allows the composition to cure by irradiation with a decreased dose of actinic radiation. In addition, an accelerator (sensitizer), such as an amine-type compound, for example, may also be used. Photo-cationic polymerization initiators, as described below, may also be used. One or more photoinitiators may be added to the composition in a total level of from about 0.1 weight % to about 20 weight % based on the weight of total coating composition.

The image-bearing (decorated) polymeric interlayer sheet is irradiated with actinic radiation (UV light or an electron beam) to cure the image on the polymeric interlayer sheet. The source of actinic radiation may be selected from a low-pressure mercury lamp, high-pressure mercury lamp, metal halide lamp, xenon lamp, excimer laser, and dye laser for UV light, an electron beam accelerator and the like. The dose is usually in the range of 50-3,000 mJ/cm² for UV light and in the range of 0.2-1,000 mu C/cm² for electron beams.

Alternatively, the image may be formed from a photo-cationic-curable material. Generally, photo-cationically-curable materials contain epoxide and/or vinyl ether materials. Upon exposure of a photogenerating acid precursor such as a triarylsulfonium salt, a Lewis acid is generated which is capable of polymerizing the epoxy functional and/or vinyl ether functional materials. The compositions may optionally include reactive diluents and solvents. Examples of preferable optional reactive diluents and solvents include epoxide-containing and vinyl ethercontaining materials. In the compositions according to the invention, any type of photoinitiator that, upon exposure to actinic radiation, forms cations that initiate the reactions of the epoxy and/or vinyl ether material(s) can be used. There are a large number of known cationic photoinitiators for epoxy and vinyl ether resins within the art that are suitable. They include, for example, onium salts with anions of weak nucleophilicity, halonium salts, iodosyl salts or sulfonium salts, such as are disclosed in EP 153904 and WO 98/28663, sulfoxonium salts, such as disclosed, for example, in EP 35969, EP 44274, EP 54509, and EP 164314, or diazonium salts, such as disclosed, for example, in US 3,708,296 and US 5,002,856. Other cationic photoinitiators are metallocene salts, such as disclosed, for example, in EP 94914 and EP 94915. A survey of other current onium salt initiators and/or metallocene salts can be found in "UV Curing, Science and Technology" (Editor S. P. Pappas, Technology Marketing Corp., 642 Westover Road, Stamford, Conn., U.S.A.) or "Chemistry & Technology of UV & EB Formulation for Coatings, Inks & Paints", Vol. 3 (edited by P. K. T. Oldring). One or more photo-cationic initiators may be added to the composition in a total level of from about 0.1 weight % to about 20 weight % based on the weight of total coating composition. The image may be cured as described above.

Jet velocity, drop size and stability are greatly affected by the surface tension and the viscosity of the ink. Ink jet inks typically have a surface tension in the range of about 20 dyne/cm to about 60 dyne/cm at 25°C. Viscosity can be as high as 30 cP at 25°C, but is typically somewhat lower. The inks have physical properties compatible with a wide range of ejecting conditions, i.e., driving frequency of the piezo element, or ejection conditions for a thermal head, for either drop-on-demand device or a continuous device, and the shape and size of the nozzle. The ink set should have excellent storage stability for long periods so as not to clog to a significant extent in an ink jet apparatus. Further, it should not alter the materials of construction of the ink jet printing device it comes in contact with, and will be preferably odorless and non-toxic.

It is preferable that the ink (as an aqueous-based, non-aqueous-based, or a mixture of an aqueous-based and non-aqueous-based vehicles) has a sufficiently low viscosity such that they can be jetted through the printing head of an ink jet printer without the necessity of heating the print head in order to lower the viscosity of the ink. It is, therefore, preferable for the ink viscosity to be below about 30 centipoise (cps), as measured at 25°C, more preferably below about 20 cps at 25°C, even more preferably below about 15 cps at 25°C, and most preferably below about 12 cps at 25°C. Preferably, the ink has a viscosity above about 1 cps at 25°C to provide good image quality. For drop-on-demand ink jet printers, it is preferable that the ink has a viscosity of above about 1.5 cps at 25°C.

The use of digital image manipulation software, such as Adobe's Photoshop® and/or Illustrator®, in combination with the raster image processing (Postershop® RIP) software can provide a completed printing project from design to finished proof in a matter of hours. For example, Adobe® Photoshop® may be used to produce a postscript file. The postscript file may through suitable interfaces be used to provide the necessary data to the printer for reproduction of the image (decoration). The Postershop® RIP software may additionally be used for scaling and color correction before outputting the necessary data to the printer for reproduction of the image (decoration).

The polymeric interlayer sheet may be mechanically stabilized during the printing operation to increase the sheet's dimensional stability so as to reduce or avoid color registration or misaligned color placement issues by using a mechanical connection between the interlayer sheet and a removable membrane or substrate. The removable membrane may take any form. The removable membrane may be a paper backing sheet adhered directly to the interlayer sheet. The removable membrane may further be a suitable sheet material attached to the edges of the interlayer sheet in any suitable manner. The attachment may be, for example, achieved by adhesive tape. Suitable materials for the removable backing or membrane may also include, for example, fiber reinforced vinyl. In some processes, the mechanical stabilization can be provided by an attachment to a component of the printing machine. The removable membrane or substrate keeps the polymeric interlayer sheet taut and allows it to be handled without deformation during the process of forming the image. Some of the processes suitable for forming the image require the interlayer to be moved through the system at a consistent rate to prevent "banding and misses" in the printing. In addition, many of the processes suitable for forming the image on the interlayer sheet involve the use of heat. The polymeric interlayer sheets may be very heat sensitive and typically may lose much of their mechanical strength at temperatures of 60°C and above. The use of a backing membrane or substrate allows the polymeric interlayer sheet to be handled in systems that include the use of heat without significant stretching or damage.

Any ink jet printer process known may be used to apply the image (decoration) to the interlayer sheet, for example the preferable poly(vinyl butyral) interlayer of the invention. A specific example of a large format ink jet printer is an MMT paint jet system, (MetroMedia Technologies International, Inc., New York, NY). This printer supports the interlayer such as a poly(vinyl butyral) interlayer on a large rotating drum, which serves to mechanically stabilize the interlayer. This can be achieved by laying the interlayer on the drum and taping the edges of the interlayer to the rotatable drum using, for example, conventional adhesive tape. This attachment to the rotating drum of the printing machine provides sufficient mechanical stabilization of the interlayer to allow accurate printing on the surface as the drum is rotated adjacent to the print head. The interlayer on the drum is held in close proximity to the printing head, which moves in an axial direction in response to the printer control system. The print head is driven in the conventional manner by the printer electronics. This type of printer typically utilizes a solvent based automotive paint. When UV-curable inksets are utilized, the UV curing lamp is generally attached to the print head(s).

Another ink jet printer design similar to the MMT system described above also utilizes a large drum to support the interlayer. This drum in this system is perforated by a series of apertures and a vacuum is applied to the interior of the drum to hold and mechanically stabilize the interlayer. This system also provides a supply roll which feeds the interlayer to the drum through guide rollers. This system typically utilizes any suitable solvent based pigmented ink.

A Vutek® 5300 digital printing machine (Vutek, Foster City, CA) operates by passing the interlayer to be printed over a series of rollers past a print head. The printer holds the interlayer to be printed under tension between rollers to provide a stable surface for printing. The interlayer is preferably stabilized with a sacrificial web which passes through the printer with the interlayer as described above. The sacrificial web can be fiber-reinforced vinyl, paper or any other material which does not stretch under moderate tension. The interlayer can be taped to the sacrificial web. The interlayer and the sacrificial web can be fed to this type of printer through a series of rollers and passes in front of the print head without being stretched or deformed to allow for accurate printing. This type of printer can use a solvent-based pigment.

Flat bed piezo electric drop-on-demand ink jet printers may also be utilized within the invention, especially for interlayers stabilized with the above mentioned sacrificial web. Typically, the printing process is of two general types. In one process, the interlayer is moved across the print head(s) during the printing process, generally through the use of rollers or through movement of the entire flatbed that the interlayer is immobilized in. In an alternative process, the print head(s) move across the interlayer immobilized in the flat bed. When UV-curable inksets are utilized, the UV curing lamp is generally attached to the print head(s).

### Adhesion Promoter Coating

The image-bearing surface of the image-bearing interlayer has an adhesive or primer layer, regardless of the process utilized to produce the image-bearing layer. Adhesion at the interface of the image or decoration and the other laminate layers promotes one or more of the desirable features of safety laminates. The adhesive or promoter is applied over at least a portion of the image, preferably over the entire image, also preferably over at least a portion of the polymeric interlayer that is not covered by the image, and also preferably over the entire image and the remainder of the surface of the polymeric interlayer.

The adhesive layer preferably can take the form of a monolayer of an adhesive primer or of a coating. While the minimum thickness can be determined based upon the minimal possible size of a monolayer or coating, the thickness can be as low as about 0.0004 mil (about 0.00001 mm) or possibly even smaller. The adhesive/primer coating may have a thickness up to about 1 mil (about 0.03 mm), or preferably, up to about 0.5 mil (about 0.013 mm), or more preferably, up to about 0.1 mil (about 0.003 mm), thick. The adhesive may be any adhesive or primer known within the art. The adhesives and primers are used to enhance the bond strength between the image-bearing surface of the image-bearing interlayer and the other laminate layers.

Preferably the adhesion promoter is selected from the group consisting of silane and poly(alkyl amine) adhesion promoters, and mixtures thereof. In one preferred embodiment, the adhesion promoter is an aminosilane. In another preferred embodiment, the adhesion promoter is selected from the group consisting of poly(vinyl amine), poly(allyl amine) and mixtures thereof.

Preferably, the primer or adhesive is selected from vinyltriethoxysilane, vinyltrimethoxysilane, vinyltris(betamethoxyethoxy)silane, gamma-methacryloxypropyltrimethoxysilane, beta(3,4-epoxycyclohexyl)ethyltrimethoxysilane, gammaglycidoxypropyltrimethoxysilane, gammaglycidoxypropylmethyldiethoxysilane, vinyl-triacetoxysilane, gammamercaptopropyltrimethoxysilane, (3-aminopropyl)trimethoxysilane, (3-aminopropyl)triethoxysilane, N-beta-(aminoethyl)-gamma-aminopropyltrimethoxysilane, N-(beta-aminoethyl) gammaaminopropylmethyldimethoxysilane, aminoethylaminopropyl silane triol homopolymer, vinylbenzylaminoethylaminopropyltrimethoxysilane, bis(trimethoxysilylpropyl)amine, poly(vinyl amine), poly(allyl amine) and the like, and mixtures thereof.

More preferably, the adhesive or primer contains an amine function. Specific examples of such materials include, for example; (3-aminopropyl)trimethoxysilane, (3-aminopropyl)triethoxysilane, N-beta(aminoethyl)-gamma-aminopropyl-trimethoxysilane, N-(beta-aminoethyl) gamma-aminopropylmethyldimethoxysilane, aminoethylaminopropyl silane triol homopolymer, vinylbenzylaminoethylaminopropyltrimethoxysilane, bis(trimethoxysilylpropyl)amine, poly(vinyl amine), poly(allyl amine) and the like and mixtures thereof. This should not be taken as limiting. Essentially any known primer or adhesive within the art can find utility within the invention.

Commercial examples of such materials include, for Dow Corning Z 6011 Silane (Dow Corning Corporation, Midland, Michigan) and SILQUEST A-1100 silane and A-1102 silane (GE Silicones, Friendly, West Virginia), believed to be (3-aminopropyl)triethoxysilane, Dow Corning Z 6020 Silane (Dow Corning), and SILQUEST A-1120 silane, (GE Silicones) believed to be N-beta-(aminoethyl)-gamma-aminopropyl-trimethoxysilane, SILQUEST A-2120 silane (GE Silicones), believed to be N-(betaaminoethyl) gamma-aminopropylmethyldimethoxysilane, Dow Corning Z 6137 Silane (Dow Corning), believed to be aminoethylaminopropyl silane triol homopolymer, Dow Corning Z 6040 Silane (Dow Corning), and SILQUEST A-187 silane (GE Silicones), believed to be gammaglycidoxypropyltrimethoxysilane, Dow Corning Z 6130 Silane (Dow Corning), believed to be methacryloxypropyltrimethoxysilane, Dow Corning Z 6132 Silane (Dow Corning), believed to be vinylbenzylaminoethylaminopropyltrimethoxysilane, Dow Corning Z 6142 Silane (Dow Corning), believed to be gammaglycidoxypropylmethyldiethoxysilane, Dow Corning Z 6075 Silane (Dow Corning), believed to be vinyltriacetoxysilane, Dow Corning Z 6172 Silane (Dow Corning), and SILQUEST A-172 silane (GE Silicones), believed to be vinyl tris(methoxyethoxy)silane, Dow Corning Z 6300 Silane (Dow Corning), and SILQUEST A-171silane (GE Silicones), believed to be vinyltrimethoxysilane, Dow Corning Z 6518 Silane (Dow Corning), and SILQUEST A-151 silane (GE Silicones), believed to be vinyltriethoxysilane, SILQUEST A-1170 silane (GE Silicones), believed to be bis(trimethoxysilylpropyl)amine and Lupamin® 9095 (BASF Corporation, Florham Park, New Jersey) believed to be poly(vinyl amine). These materials have been found to provide adequate adhesion between the image-bearing interlayer surface and the other laminate layers.

Even more preferably, the adhesive or primer is a polyolefin with primary amine functionality, such as poly(vinyl amine), poly(allyl amine) and the like. Such adhesives and primers have been found to provide even higher levels of adhesion between the image-bearing surface of the image-bearing interlayer and the other laminate layers, which is desirable to provide the highest level of safety attributes to the laminates.

The adhesives may be applied through melt processes or through solution, emulsion, dispersion, and the like, coating processes. One of ordinary skill in the art will be able to identify appropriate process parameters based on the composition and process used for the coating formation. The above process conditions and parameters for making coatings by any method in the art are easily determined by a skilled artisan for any given composition and desired application. For example, the adhesive or primer composition can be cast, sprayed, air knifed, brushed, rolled, poured or printed or the like onto the image-bearing interlayer surface. Generally the adhesive or primer is diluted into a liquid medium prior to application to provide uniform coverage over the image-bearing surface. The liquid media may function as a solvent for the adhesive or primer to form solutions or may function as a non-solvent for the adhesive or primer to form dispersions or emulsions. Coatings may also be applied by spraying.

In a further embodiment, image-bearing (e.g., decorated) safety laminates are provided which include at least one image-bearing interlayer, at least one white layer and at least one other laminate layer, such as the rigid sheet layer or other interlayer, preferably with a laminate adhesive strength of at least about 1000 psi. In order for the image-bearing safety laminates to function as is commonly assumed for safety laminates, the laminate adhesive strength must be sufficient to avoid delamination. The laminate adhesive strength may be measured by any known test method, for example, through peel testing as described within WO 99/58334. Preferably, the image-bearing safety laminates which include at least one image-bearing interlayer and at least one other laminate layer which have a laminate adhesive strength of at least about 2000 psi, more preferably at least about 3000 psi, and even more preferably at least about 4000 psi.

In another embodiment, the invention contains at least one white layer bound to the image-bearing interlayer by the adhesion promoter. In another embodiment, the invention contains at least one rigid layer sheet, such as a glass sheet, bound to the image-bearing interlayer by the adhesion promoter. In another embodiment, the invention contains at least one other interlayer sheet bound to the image-bearing interlayer by the adhesion promoter. The other interlayer sheet is preferably selected from the group consisting of a poly(vinyl butyral) sheets or poly(ethylene-co-vinyl acetate) sheets, more preferably selected from the group consisting of poly(vinyl butyral) sheets, whereby the image is applied through an ink jet printing process and has a coating of an adhesion promoter which is in direct contact with the image and the other interlayer sheet. Preferably, the image-bearing surface of the image-bearing interlayer is in contact with another laminate layer, such as the white layer, the rigid layer or the other interlayer sheet, to provide a high level of stability to the image from, for example, environmental degradation. By embedding the image, it further protects it from degradation through routine cleaning and the like.

### Opaque Layer

The invention is directed to an image-bearing article comprising a poly(ethylene-co-vinyl acetate) or poly(vinyl butyral) interlayer bearing an image and further comprising an opaque layer.

The term "opaque", as used herein, refers to any material in any thickness, provided that the material selected, in the thickness selected, has a total luminous transmission of less than about 70% as measured by ASTM test method number D 1003. Preferably, the opaque material has a total luminous transmission of less than about 50 %, more preferably less than about 30 %, still more preferably less than about 10%, and yet more preferably less than about 1 % as measured by ASTM test method number D 1003.

The luminous transmission of the opaque layer need not be uniform over its entire area, so long as the portion of the layer that behind the image is opaque. For example, an image incorporating, surrounded by or partially surrounded by a transparent or translucent field may be desired in a particular design. Thus, a layer in which an opaque portion incorporates, is surrounded by or is partially surrounded by a transparent or translucent portion is considered an "opaque layer", as the term is used herein, so long as the opaque portion meets the above criteria and is positioned behind the image.

The opaque layer may have any color or combination of colors and may be made of any material to which poly vinyl butyral will adhere with or without an adhesive, such as, for example, polymeric resins, glass, composites such as Corian®, wood, metal, concrete or plaster, a metallized polymeric sheet or film, or the like. The opaque layer is preferably white, for example a white film, a white sheet, a white rigid sheet, a frosted glass sheet, an etched glass sheet, or a combination of two or more preferred opaque layers. White films are more preferred opaque layers.

Because white layers are preferred, the opaque layer may occasionally be referred to herein as a "white layer." Unless it is clear from the specific context that a particular discussion pertains only to white layers, however, it is to be understood that the description herein applies to an opaque layer of any color.

White or other colored films are articles of commerce and encompass a wide variety of compositions and film types and constructions. The films may be of any composition or construction known. These films typically range from being translucent to opaque. Examples include polyolefin films with low spectral transmissions are disclosed within, for example, US 6,020,116, US 6,030,756, US 6,071,654, US 6,200,740, US 6,242,142, and US 6,364,997. White polyester films are disclosed within, for example, US 3,944,699, US 4,780,402, US 4,898,897, US 5,143,765, US 5,223,383, US 5,281,379, US 5,660,931, US 5,672,409, US 5,888,681, US 6,150,012, US 6,187,523, US 6,440,548, US 6,521,351, US 6,641,924, US 6,645,589, US 6,649,250, US 6,783,230, US 6,869,667, US 6,939,600, US 2002/0136880, US 2003/0068466, US 2004/0178139, and EP 0 942 031.

Preferably, the white film is thermally dimensionally stable under typical lamination conditions.

The white films may be monolayer or multilayer films formed through, for example, lamination, coextrusion or extrusion coating processes. The layers of a multilayer film may be identical or may be advantageously formed from different compositions. For end uses which require highly opaque white films with very low luminous transmission, the so called "white-black-white" films are preferable. The white-black-white films incorporate white outer layers with a core black layer.

The thickness of the white film is not critical and may be varied depending on the particular application. Generally, the thickness of the white film has a thickness of about 10 mils (0.25 millimeters (mm)) or less, preferably about 0.5 mils (0.012 mm) to about 10 mils (0.25 mm), more preferably about 1 mil (0.025 mm) to about 5 mils (0.13 mm).

Preferably, one or both surfaces of the white film may be treated to enhance the adhesion. This treatment may take any form known within the art, including adhesives, primers, such as silanes, flame treatments, such as disclosed within US 2,632,921, US 2,648,097, US 2,683,894, and US 2,704,382, plasma treatments, such as disclosed within US 4,732,814, electron beam treatments, oxidation treatments, corona discharge treatments, chemical treatments, chromic acid treatments, hot air treatments, ozone treatments, ultraviolet light treatments, sand blast treatments, solvent treatments, and the like and combinations thereof. For example, a thin layer of carbon may be deposited on one or both surfaces of the polymeric film through vacuum sputtering as disclosed in US 4,865,711. For example, US 5,415,942 discloses a hydroxy-acrylic hydrosol primer coating that may serve as an adhesion-promoting primer for poly(ethylene terephthalate) films. The polymeric film may include a primer coating on one or both surfaces, more preferably both surfaces, comprising a coating of a polyallylamine-based primer. The polyallylamine-based primer and its application to a poly(ethylene terephthalate) polymeric film are disclosed within US 5,411,845, US 5,770,312, US 5,690,994, and US 5,698,329.

White films are commercially available. For example, the DuPont Teijin Films Company (Wilmington, DE) offers a wide variety of white films under their Melinex® tradename. Specific examples include Melinex® 226/227 which is described as a milky white polyester film available in 125-350 micron film thicknesses, Melinex® 329 which is described as a white, opaque untreated polyester film available in 55-330 micron film thicknesses, Melinex® 329 Direct Print which is described as a white, opaque polyester film with one side treated available in a 50 micron film thickness, Melinex® 339 which is described as a white, opaque polyester film with both sides treated available in 50-250 micron film thicknesses, Melinex® 377 which is described as a translucent, matte polyester film available in 12-75 micron film thicknesses and Melinex® DTM White which is described as a white film available in 5-, 7-, and 10-mil thicknesses. They further offer Melinex® White-Light Block films in a standard grade 6364 and a grade 6368 with a pretreatment on both surfaces for solvent adhesion. The Melinex® White-Light Block films are totally opaque coextruded white/gray/white layered polyester films. The gray core layer ensures opacity. Further commercial examples include Jindal® 470-JPEL described as a tough milky white polyester available from the Jindal Poly Films Ltd. (New Delhi, India) with a total luminous transmission of 70 %. Polymex® P1600 (PSG Group Ltd., London, United Kingdom) is described as a tough milky white polyester film with untreated surfaces with a total luminous transmission of 70 % available in 75-350 micron film thicknesses. Polymex® PL822 (PSG Group Ltd.) is described as an opaque white polyester film with chemically-treated surfaces with a total luminous transmission of 70 % available in 50-125 micron film thicknesses. The Oce North America, Inc. (Itasca, IL) has white film products in which one surface has been treated to be receptive to inkjet coatings, while the other side has been treated with an antistatic agent.

The white layer may be a white sheet which can be formed from any of the materials described for the interlayer sheet or the other interlayer sheet. The white sheet can be described as above for the white film with the exception of thickness. An example of a white sheet is disclosed within US 20050142366.

A particularly preferable subset of white sheets contain at least one filler which consists essentially of a composite material obtained from a composition comprising a mineral filler interspersed in a thermoset polymer matrix wherein at least about 80 wt% of the composite filler particles are retained on a number 80 standard sieve. The composite filler material comprises or consists essentially of small particles obtained from solid surface material, such as, for example, Corian® (DuPont), Wilsonart® (Wilsonart International, Temple, TX), Avonite® (Avonite Surfaces^{™}, Florence, KY), wherein the solid surface material is a composite of a finely divided mineral filler dispersed in a thermoset organic polymer matrix. The composite filler material can optionally include at least one pigment component. The composite filler as used in the practice imparts a decorative look to the interlayer and to the laminate obtained from the interlayer. Such white sheets are disclosed within, for example, US 2006110590.

The white layer can also be a frosted or etched glass sheet, which are also articles of commerce that are well described within the art.

### Laminates

The laminates may optionally include additional layers, such as other interlayer sheets, other uncoated polymeric films, such as biaxially oriented poly(ethylene terephthalate) film, and other coated polymeric films. The "additional layer" polymeric film and sheets may provide additional attributes, such as acoustical barriers, added penetration resistance and solar control. Preferably, the "additional layers" polymeric film is a biaxially oriented poly(ethylene terephthalate). Preferably the other interlayer sheets are selected from the group consisting of poly(ethylene-co-vinyl acetate) sheets and poly(vinyl butyral) sheets, more preferably from poly(vinyl butyral) sheets. The polymeric films and sheets may additionally have functional coatings applied to them, such as organic infrared absorbers and sputtered metal layers, such as silver coatings and the like. Adhesives or primers may be included, especially to provide adequate adhesion between the other polymeric layer and the interlayer, as described above.

The laminates may additionally contain one or more rigid sheet layers. The rigid sheet layer may be selected from the group consisting of glass or rigid transparent plastic sheets, such as, for example, polycarbonate, acrylics, polyacrylate, poly(methyl methacrylate), cyclic polyolefins, such as ethylene norbornene polymers, polystyrene (preferably metallocene-catalyzed) and the like and combinations thereof. Preferably, the rigid sheet layer comprises a material with a modulus of about 100,000 psi (690 MPa) or greater (as measured by ASTM Method D-638). Preferably the rigid sheet layer is selected from the group consisting of glass, polycarbonate, poly(methyl methacrylate), and combinations thereof. More preferably, the rigid sheet layer is a glass sheet.

The term "glass" is meant to include not only window glass, plate glass, silicate glass, sheet glass, low iron glass, and float glass, but also includes colored glass, specialty glass which includes ingredients to control, for example, solar heating, coated glass with, for example, sputtered metals, such as silver or indium tin oxide, for solar control purposes, E-glass, Toroglass, Solex® (PPG Industries, Pittsburgh, PA) glass and the like. Such specialty glasses are disclosed in, for example, US 4,615,989, US 5,173,212, US 5,264,286, US 6,150,028, US 6,340,646, US 6,461,736, and US 6,468,934. The glass may also include frosted or etched glass sheet. Frosted and etched glass sheets are articles of commerce and are well disclosed within the common art and literature. The type of glass to be selected for a particular laminate depends on the intended use.

Metal or ceramic plates may be substituted for the rigid polymeric sheet or glass if clarity is not required for the laminate. Adhesives and primers may be used to enhance the bond strength between the laminate layers, if desired. The adhesives and primers and the processes to apply them can be as described above.

Preferable representative safety laminate examples include:
- glass/image-bearing poly(vinyl butyral) interlayer (PVB)/white film/PVB/glass;
- glass/image-bearing PVB/PVB (image in direct contact with PVB)/white film/PVB/glass;
- glass/image-bearing PVB/white film;
- glass/image-bearing PVB/PVB (image in direct contact with PVB)/white film;
- glass/image-bearing PVB/white sheet/glass;
- glass/image-bearing PVB/white film/image-bearing PVB/glass;
- glass/image-bearing PVB/white sheet/poly(allyl amine)-primed, biaxially-oriented poly(ethylene terephthalate) film (PET);
and the like, wherein the image-bearing interlayer sheet comprises an image formed from certain pigments or an UV-curable inkset through an ink jet process, and the image-bearing surface has been primed with poly(allyl amine), poly(vinyl amine), aminosilane or another adhesion promoter.

The laminates can be produced through autoclave and non-autoclave processes, as described below.

The following describes a specific example for the preparation a glass/image-bearing poly(vinyl butyral) interlayer/white film/poly(vinyl butyral)/glass laminate through an autoclave process. The laminate can be formed by conventional autoclave processes known within the art. In a typical process, the glass sheet, the image-bearing poly(vinyl butyral) interlayer, the white film, the poly(vinyl butyral) interlayer and a second glass sheet are laminated together under heat and pressure and a vacuum (for example, in the range of about 27-28 inches Hg (689-711 mm)), to remove air. Preferably, the glass sheet has been washed and dried. A typical glass type is 90 mil thick annealed flat glass. In a typical procedure, the image-bearing interlayer and the other interlayer are positioned between the white film and the glass plates to form a glass/image-bearing interlayer/white film/interlayer/glass assembly, placing the assembly into a bag capable of sustaining a vacuum ("a vacuum bag"), drawing the air out of the bag using a vacuum line or other means of pulling a vacuum on the bag, sealing the bag while maintaining the vacuum, placing the sealed bag in an autoclave at a temperature of about 130°C to about 180°C, at a pressure of about 150 psi (11.3 bar) to about 250 psi (18.8 bar), for from about 10 to about 50 minutes. Preferably the bag is autoclaved at a temperature of from about 120°C to about 160°C for 20 minutes to about 45 minutes. More preferably the bag is autoclaved at a temperature of from about 135°C to about 160°C for 20 minutes to about 40 minutes. Most preferably the bag is autoclaved at a temperature of from about 145°C to about 155°C for 25 minutes to about 35 minutes. A vacuum ring may be substituted for the vacuum bag. One type of vacuum bags is disclosed within US 3,311,517.

Alternatively, other processes may be used to produce the laminates. Any air trapped within the glass/image-bearing interlayer/white film/interlayer/glass assembly may be removed through a nip roll process. For example, the glass/image-bearing interlayer/white film/interlayer/glass assembly may be heated in an oven at about 80 to about 120°C, preferably about 90 to about 100°C, for about 20 minutes to about 40 minutes. Thereafter, the heated glass/image-bearing interlayer/white filmfinterlayer/glass assembly is passed through a set of nip rolls so that the air in the void spaces between the glass and the interlayer may be squeezed out, and the edge of the assembly sealed. The assembly at this stage is referred to as a pre-press.

The pre-press assembly may then placed in an air autoclave where the temperature is raised to about 120°C to about 160°C, preferably about 135°C to about 160°C, and pressure of about 100 psig to about 300 psig, preferably about 200 psig (14.3 bar). These conditions are maintained for about 15 minutes to about 1 hour, preferably about 20 minutes to about 50 minutes, after which, the air is cooled while no more air is added to the autoclave. After about 20 minutes to about 40 minutes of cooling, the excess air pressure is vented and the laminates are removed from the autoclave. This should not be considered limiting. Essentially any lamination process known within the art may be used with the interlayers.

The laminates can also be produced through non-autoclave processes. Such non-autoclave processes are disclosed, for example, within US 3,234,062, US 3,852,136, US 4,341,576, US 4,385,951, US 4,398,979, US 5,536,347, US 5,853,516, US 6,342,116, US 5,415,909, US 2004/0182493, EP 1 235 683 B1, WO 91/01880 and WO 03/057478 A1. Generally, the non-autoclave processes include heating the pre-press assembly and the application of vacuum, pressure or both. For example, the pre-press may be successively passed through heating ovens and nip rolls.

The following examples are provided to describe the invention in further detail. These examples, which set forth a preferred mode presently contemplated for carrying out the invention, are intended to illustrate and not to limit the invention.

### Examples

### Example 1

An ink set is used which included the following ink formulations; Magenta (36.08 weight % of a magenta pigment dispersion (7 weight % pigment)), 38.35 weight % DOWANOL DPMA (Dow Chemical Company), and 25.57 weight % DOWANOL DPnP (Dow Chemical Company) (based on the total weight of the ink formulation); Yellow (35.23 weight % of a yellow pigment dispersion (7 weight % pigment)), 38.86 weight % DOWANOL DPMA, and 25.91 weight % DOWANOL DPnP (based on the total weight of the ink formulation); Cyan (28.35 weight % of a cyan pigment dispersion (5.5 weight % pigment)), 42.99 weight % DOWANOL DPMA, and 28.66 weight % DOWANOL DPM (Dow Chemical Company), (based on the total weight of the ink formulation); and Black (27.43 weight % of a black pigment dispersion (7 weight % pigment)), 43.54 weight % DOWANOL DPMA, and 29.03 weight % DOWANOL DPM (based on the total weight of the ink formulation). The pigment dispersion compositions and preparations are as disclosed within the Example section of US 7,041,163.

Using the above mentioned ink set, a 30 mils thick (0.75 mm) Butacite® poly(vinyl butyral) sheet (DuPont) is ink jet printed with an image with an Epson 3000 printer to provide an ink coverage of 25 %.

A solution of SILQUEST A-1100 silane (0.05 weight percent based on the total weight of the solution) (GE Silicones) (believed to be gammaaminopropyltrimethoxysilane), isopropanol (66.63 weight % based on the total weight of the solution), and water (33.32 weight % based on the total weight of the solution) is prepared and allowed to sit for at least one hour prior to use. A 12-inch by 12-inch piece of the image-bearing Butacite® sheet is dipped into the silane solution (residence time of about 1 minute) removed and allowed to drain and dry under ambient conditions.

A glass laminate composed of a glass layer, the silane-primed, image-bearing Butacite® poly(vinyl butyral) interlayer, a white film layer, a Butacite® poly(vinyl butyral) interlayer and a glass layer is produced in the following manner. The silane-primed, image-bearing Butacite® interlayer (12 inches by 12 inches (305 mm X 305 mm)), the Melinex® 329 white film (12 inches by 12 inches (305 mm X 305 mm) by 5 mils thick (0.13 mm) (DuPont Teijin Films Company, Wilmington, DE), and the Butacite® interlayer (12 inches by 12 inches (305 mm X 305 mm) by 15 mils thick (0.38 mm)) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the Melinex® 329 white film layer, the Butacite® interlayer and a clear annealed float glass plate layer (12 inches by 12 inches (305 mm X 305 mm) by 2.5 mm thick). The glass/interlayer/glass assembly is then placed into a vacuum bag and heated to 90 - 100 C for 30 minutes to remove any air contained between the glass/interlayer/glass assembly. The glass/interlayer/glass pre-press assembly is then subjected to autoclaving at 135 C for 30 minutes in an air autoclave to a pressure of 200 psig, (14.3 bar), as described above. The air is then cooled while no more air is added to the autoclave. After 20 minutes of cooling when the air temperature is less than about 50 C, the excess pressure is vented, and the glass/interlayer/glass laminate is removed from the autoclave.

### Example 2

Using the above mentioned ink set of Example 1, a 30 mils thick (0.75 mm) Butacite® poly(vinyl butyral) sheet (DuPont) taped to a 6 mils (0.15 mm) thick biaxially-oriented poly(ethylene terephthalate) film is ink jet printed with an image with an Epson 3000 printer to provide an ink coverage of 50 %. The tape and polyester film are removed to provide the image-bearing Butacite® sheet.

A solution of SILQUEST A-1100 silane (0.05 weight percent based on the total weight of the solution) (GE Silicones) (believed to be gammaaminopropyltrimethoxysilane), acetic acid (0.01 weight % based on the total weight of the solution), isopropanol (66.63 weight % based on the total weight of the solution), and water (33.31 weight % based on the total weight of the solution) is prepared. A 12-inch by 12-inch piece of the image-bearing Butacite® sheet from above is dipped into the silane solution (residence time of about 1 minute) removed and allowed to drain and dry under ambient conditions.

A glass laminate composed of a glass layer, the silane-primed, image-bearing Butacite® interlayer, a white film layer, a Butacite® poly(vinyl butyral) interlayer and a glass layer is produced in the following manner. The primed, image-bearing Butacite® interlayer (12 inches by 12 inches (305 mm X 305 mm)), the Melinex® 226/227 white film (12 inches by 12 inches (305 mm X 305 mm) by 6 mils thick (0.15 mm) (DuPont Teijin Films Company), and the Butacite® interlayer (12 inches by 12 inches (305 mm X 305 mm) by 30 mils (0.75 mm) thick) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the Melinex® 226/227 white film layer, the Butacite® interlayer and a clear annealed float glass plate layer (12 inches by 12 inches (305 mm X 305 mm) by 2.5 mm thick). The glass/interlayer/glass is then laminated as described for Example 1.

### Preparative Example PE 1

White poly(vinyl butyral) sheeting is prepared using calcium carbonate (CaCO3) having a median particle size of 2 microns similarly to as disclosed within WO 03/093000. The dried poly(vinyl butyral) resin, tetraethyleneglycol di-heptanoate (4G7) and calcium carbonate are fed in a controlled manner to a twin screw extruder at nominally 210 C. The resulting 30 mils thick (0.75 mm) sheeting is quenched on a chill roll. The final sheet composition nominally contains 69 weight % poly(vinyl butyral), 27 weight % 4G7 and 4 weight % calcium carbonate, based on the total weight of the sheet composition.

### Example 3

A 30 mils thick (0.75 mm) Butacite® poly(vinyl butyral) sheet (DuPont) is ink jet printed with an image with a NUR TEMPO Modular Flatbed Inkjet Press (NUR Microprinters, Monnachie, NJ) equipped with a UV curing lamp on the print heads and utilizing a pigmented 4-color CMYK UV-curable inkset available from NUR Microprinters to provide an ink coverage of 150 %.

The image-bearing surface is coated with a 0.5 weight % aqueous solution of poly(vinyl amine) with a # 8 casting rod and is dried under ambient conditions.

A glass laminate composed of a glass layer, the primed, image-bearing Butacite® polymeric interlayer, the white poly(vinyl butyral) sheet prepared within Preparative Example PE 1 and a glass layer is produced in the following manner. The primed, image-bearing Butacite® interlayer (12 inches by 12 inches (305 mm X 305 mm)) and the white poly(vinyl butyral) sheet prepared within Preparative Example PE 1 (12 inches by 12 inches (305 mm X 305 mm) by 30 mils (0.75 mm) thick) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the white poly(vinyl butyral) sheet layer from Preparative Example PE 1, and a clear annealed float glass plate layer (12 inches by 12 inches (305 mm X 305 mm) by 2.5 mm thick). The glass/interlayer/glass assembly is then laminated as described for Example 1.

### Example 4

A 15 mils (0.38 mm) thick Butacite® poly(vinyl butyral) sheet (DuPont) taped to a 6 mils (0.15 mm) thick biaxially-oriented poly(ethylene terephthalate) film is ink jet printed with an image with a NUR TEMPO Modular Flatbed Inkjet Press (NUR Microprinters) equipped with a UV curing lamp on the print heads and utilizing a pigmented 4-color CMYK UV-curable inkset available from NUR Microprinters to provide an ink coverage of 300 %. The tape and polyester film are removed to provide the image-bearing Butacite® sheet.

A solution of SILQUEST A-1100 silane (0.10 weight % based on the total weight of the solution) (GE Silicone) (believed to be gammaaminopropyltrimethoxysilane) acetic acid (0.01 weight % based on the total weight of the solution), isopropanol (66.59 weight % based on the total weight of the solution), and water (33.30 weight % based on the total weight of the solution) is prepared. A 12-inch by 12-inch piece of the image-bearing Butacite® sheet is dipped into the silane solution (residence time of about 1 minute) removed and allowed to drain and dry under ambient conditions.

A glass laminate composed of a glass layer, the sitane-primed, image-bearing Butacite® poly(vinyl butyral) interlayer, a Melinex® 329 Direct Print white film (DuPont Teijin Films Company), a Butacite® poly(vinyl butyral) interlayer and a glass layer is produced in the following manner. The silane-primed, image-bearing Butacite® interlayer (12 inches by 12 inches (305 mm X 305 mm)) and the Butacite® interlayer (12 inches by 12 inches (305 mm X 305 mm) by 15 mils (0.38 mm) thick) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the Melinex® 329 Direct Print white film layer (12 inches by 12 inches (305 mm X 305 mm) by 2 mils (0.05 mm) thick), the Butacite® interlayer and a clear annealed float glass plate layer (12 inches by 12 inches (305 mm X 305 mm) by 2.5 mm thick). The glass/interlayer/glass assembly is then laminated as described for Example 1.

### Preparative Example PE 2

To a 83 mm W&P twin screw extruder is added individually and simultaneously: dried poly(vinyl butyral) resin; triethylene glycol di-2-ethylhexanoate (3GO) plasticizer which includes thermal and ultraviolet light stabilizers, and a composite filler type KJ (ground Corian®, DuPont Company, having a mixture of particles, characterized in that 65 wt% passes through a No. 12 U.S. standard sieve). An adhesion control agent (3:1 (wt:wt) potassium:magnesium, as potassium acetate and magnesium acetate) is also added. The extruder fed a nominal 100 cm slot sheeting die and the resulting sheeting is controlled to nominally 30 mils (0.75 mm) thickness. The sheeting is quenched on a chill drum and wound into rolls. The final sheet composition nominally contains 64.4 weight % poly(vinyl butyral), 23 weight % 3GO, 0.11 weight % UV stabilizer, 0.03 weight % hindered amine light stabilizer (HALS), 70 ppm potassium ion, and 12.5 weight % KJ filler, based on the total weight of the sheet composition.

### Example 5

Using the above mentioned ink set of Example 1, a 30 mils thick (0.75 mm) Butacite® poly(vinyl butyral) sheet (DuPont) is ink jet printed with an image with an Epson 3000 printer to provide an ink coverage of 200 %.

The image-bearing surface is coated with a 0.5 weight % aqueous solution of poly(vinyl amine) with a # 8 casting rod and is dried under ambient conditions.

A glass laminate composed of a glass layer, the primed, image-bearing Butacite® interlayer, a white sheet from Preparative Example PE 2 and a glass layer is produced in the following manner. The primed, image-bearing Butacite® interlayer (12 inches by 12 inches (305 mm X 305 mm)) and a white sheet from Preparative Example PE 2 (12 inches by 12 inches (305 mm X 305 mm) by 30 mils (0.75 mm) thick) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the white sheet layer from Preparative Example PE 2 and a clear annealed float glass plate layer (12 inches by 12 inches (305 mm X 305 mm) by 2.5 mm thick). The glass/interlayer/glass assembly is then laminated as described for Example 1.

### Example 6

A Butacite® poly(vinyl butyral) sheet (12-inch by 12 inch (305 mm X 305 mm) by 30 mils (0.75 mm) thick) is ink jet printed with an image with a NUR TEMPO Modular Flatbed Inkjet Press (NUR Microprinters, Monnachie, NJ) equipped with a UV curing lamp on the print heads and utilizing a pigmented 6-color CMYK + Iclm UV-curable inkset and a UV-curable white ink available from NUR Microprinters to provide an ink coverage of 500 %.

A solution of SILQUEST A-1100 silane (0.025 weight % based on the total weight of the solution) (GE Silicones) (believed to be gammaaminopropyltrimethoxysilane), isopropanol (66.65 weight % based on the total weight of the solution), and water (33.32 weight % based on the total weight of the solution) is prepared and allowed to sit for at least one hour prior to use. A 12-inch by 12-inch piece of the image-bearing Butacite® interlayer is dipped into the silane solution (residence time of about 1 minute), removed and allowed to drain and dry under ambient conditions.

A glass laminate composed of a glass layer, the silane-primed, image-bearing Butacite® interlayer, a Melinex® White-Light Block film grade 6364 (DuPont Teijin Films Company) and a SentryGlas® SpallShield® anti-spall composite 3010 bilaminate (DuPont) (a bilaminate of a 30 mils (0.75 mm) thick poly(vinyl butyral) sheet and a 10 mils (0.25 mm) thick poly(ethylene terephthalate) film) is produced in the following manner. The silane-primed, image-bearing Butacite® interlayer (12 inches by 12 inches (305 mm X 305 mm)) and the SentryGlas® SpallShield® (12 inches by 12 inches (305 mm X 305 mm)) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the Melinex® White-Light Block film grade 6364 layer, the SentryGlas® SpallShield® layer (with the poly(vinyl butyral layer in direct contact with the Melinex® White-Light Block film) and a clear annealed float glass cover plate layer (12 inches by 12 inches (305 mm X 305 mm) by 2.5 mm thick). The glass/image-bearing interlayer/white film/SentryGlas® SpallShield®/glass assembly is then laminated as described for Example 1. Removal of the glass cover plate provides the desired laminate.

### Example 7

Using the above mentioned ink set of Example 1, a 15 mils (0.38 mm) thick Butacite® poly(vinyl butyral) sheet (DuPont) taped to a 6 mils (0.15 mm) thick biaxially-oriented poly(ethylene terephthalate) film is ink jet printed with an image with an Epson 3000 printer to provide an ink coverage of 200 %. The tape and polyester film are removed to provide the image-bearing Butacite® sheet.

A solution of SILQUEST A-1100 silane (0.10 weight % based on the total weight of the solution) (GE Silicones) (believed to be gammaaminopropyltrimethoxysilane), acetic acid (0.01 weight % based on the total weight of the solution), isopropanol (66.59 weight % based on the total weight of the solution) and water (33.30 weight % based on the total weight of the solution) is prepared. A 12-inch by 12-inch piece of the image-bearing Butacite® interlayer is dipped into the silane solution (residence time of about 1 minute), removed and allowed to drain and dry under ambient conditions.

A glass laminate composed of a glass layer, the silane-primed, image-bearing Butacite® interlayer, a Melinex® DTM White film layer (DuPont Teijin Films Company), a Butacite® interlayer and a glass layer is produced in the following manner. The primed, image-bearing Butacite® interlayer (12 inches by 12 inches (305 mm X 305 mm)), the Melinex® DTM White film (12 inches by 12 inches (305 mm X 305 mm) by 7 mils (0.18 mm) thick) and the Butacite® interlayer, (12 inches by 12 inches (305 mm X 305 mm) by 15 mils (0.38 mm) thick) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the white film layer, the Butacite® interlayer and a clear annealed float glass plate layer (12 inches by 12 inches (305 mm X 305 mm) by 2.5 mm thick). The glass/interlayer/glass assembly is then laminated as described for Example 1.

### Example 8

Using the above mentioned ink set of Example 1, two 15 mils thick (0.38 mm) Butacite® poly(vinyl butyral) sheets (DuPont) are ink jet printed with an image with an Epson 3000 printer to provide an ink coverage of 125%.

A solution of SILQUEST A-1100 silane (0.10 weight % based on the total weight of the solution) (GE Silicones) (believed to be gammaaminopropyltrimethoxysilane), acetic acid (0.01 weight % based on the total weight of the solution), isopropanol (66.59 weight % based on the total weight of the solution) and water (33.30 weight % based on the total weight of the solution) is prepared. Two 12-inch by 12-inch pieces of the image-bearing Butacite® interlayer are dipped into the silane solution (residence time of about 1 minute), removed and allowed to drain and dry under ambient conditions.

A glass laminate composed of a glass layer, the silane-primed, image-bearing Butacite® polymeric interlayer, a Melinex® White-Light Block film grade 6364 (DuPont Teijin Films Company), a second silane-primed, image-bearing Butacite® interlayer and a glass layer is produced in the following manner. The silane-primed, image-bearing Butacite® interlayers (12 inches by 12 inches (305 mm X 305 mm)) and the Melinex® White-Light Block film grade 6364 (12 inches by 12 inches (305 mm X 305 mm)) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the white film layer, a second primed, image-bearing Butacite® interlayer and a clear annealed float glass plate layer (12 inches by 12 inches (305 mm X 305 mm) by 2.5 mm thick). The glass/interlayer/glass assembly is then laminated as described for Example 1.

### Example 9

A 15 mils (0.38 mm) thick Butacite® poly(vinyl butyral) sheet (DuPont) taped to a 6 mils (0.15 mm) thick biaxially-oriented poly(ethylene terephthalate) film is ink jet printed with an image with a NUR TEMPO Modular Flatbed Inkjet Press (NUR Microprinters) equipped with a UV curing lamp on the print heads and utilizing a pigmented 4-color CMYK UV-curable inkset available from NUR Microprinters to provide an ink coverage of 250 %. The tape and polyester film are removed to provide the image-bearing Butacite® sheet.

The image-bearing surface is coated with a 0.5 weight % aqueous solution of poly(vinyl amine) with a # 8 casting rod and is dried under ambient conditions.

A glass laminate composed of a glass layer, the primed, image-bearing Butacite® interlayer, a Melinex® 339 white film layer (DuPont Teijin Films Company), a Butacite® poly(vinyl butyral) interlayer and a glass layer is produced in the following manner. The primed, image-bearing Butacite® interlayer (12 inches by 12 inches (305 mm X 305 mm)), the Melinex® 339 white film (12 inches by 12 inches (305 mm X 305 mm) by 5 mils (0.13 mm) thick) and the Butacite® interlayer (12 inches by 12 inches (305 mm X 305 mm) by 15 mils thick (0.38 mm)) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the white film layer, the Butacite® interlayer and a clear annealed float glass plate layer (12 inches by 12 inches (305 mm X 305 mm) by 2.5 mm thick). The glass/interlayer/glass assembly is then laminated as described for Example 1.

### Preparative Example PE 3

White poly(vinyl butyral) sheeting is prepared using calcium carbonate (CaCO3) having a median particle size of 4 microns similarly to as disclosed within WO 03/093000. The dried poly(vinyl butyral) resin, tetraethyleneglycol di-heptanoate (4G7) and calcium carbonate are fed in a controlled manner to a twin screw extruder at nominally 210 C. The resulting 15 mils thick (0.38 mm) sheeting is quenched on a chill roll. The final sheet composition nominally contains 66 weight % poly(vinyl butyral), 26 weight % 4G7 and 8 weight % calcium carbonate, based on the total weight of the sheet composition.

### Example 10

Using the above mentioned ink set of Example 1, a 15 mils (0.38 mm) thick Butacite® poly(vinyl butyral) sheet (DuPont) taped to a 6 mils (0.15 mm) thick biaxially-oriented poly(ethylene terephthalate) film is ink jet printed with an image with an Epson 3000 printer to provide an ink coverage of 150 %. The tape and polyester film are removed to provide the image-bearing Butacite® sheet.

A solution of SILQUEST A-1100 silane (0.10 weight % based on the total weight of the solution) (GE Silicones) (believed to be gammaaminopropyltrimethoxysilane), acetic acid (0.01 weight % based on the total weight of the solution), isopropanol (66.59 weight % based on the total weight of the solution) and water (33.30 weight % based on the total weight of the solution) is prepared. A 12-inch by 12-inch piece of the image-bearing Butacite® interlayer is dipped into the silane solution (residence time of about 1 minute), removed and allowed to drain and dry under ambient conditions.

A glass laminate composed of a glass layer, the silane-primed, image-bearing Butacite® interlayer, the white sheet from Preparative Example PE 3, and a glass layer is produced in the following manner. The silane-primed, image-bearing Butacite® interlayer (12 inches by 12 inches (305 mm X 305 mm)) and the white sheet from Preparative Example PE 3 (12 inches by 12 inches (305 mm X 305 mm) by 15 mils thick (0.38 mm)) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the white sheet layer (with the image-bearing surface of the primed, image-bearing Butacite® interlayer in contact with the surface of the white sheet layer) and a clear annealed float glass plate layer (12 inches by 12 inches (305 mm X 305 mm) by 2.5 mm thick). The glass/interlayer/glass assembly is then laminated as described for Example 1.

### Preparative Example PE 4

To a 83 mm W&P twin screw extruder is added individually and simultaneously: dried poly(vinyl butyral) resin; triethylene glycol di-2-ethylhexanoate (3GO) plasticizer which includes thermal and ultraviolet light stabilizers, and a composite filler type SM (ground Corian®, (DuPont) having a mixture of particles characterized in that 100 wt% passes through a No. 12 U.S. standard sieve). An adhesion control agent (3:1 (wt:wt) potassium:magnesium, as potassium acetate and magnesium acetate) is also added. The extruder fed a nominal 100 cm slot sheeting die and the resulting sheeting controlled to nominally 15 mils (0.38 mm) thickness. The sheeting is quenched on a chill drum and wound into rolls. The final sheet composition nominally contains 67.9 weight % poly(vinyl butyral), 24.5 weight % 3GO, 0.11 weight % UV stabilizer, 0.03 weight % hindered amine light stabilizer (HALS), 70 ppm potassium ion, and 7.5 weight % SM filler, based on the total weight of the sheet composition.

### Example 11

A Butacite® poly(vinyl butyral) sheet (12-inch by 12 inch (305 mm X 305 mm) by 15 mils (0.38 mm) thick) (DuPont) taped to a 6 mils (0.15 mm) thick biaxially-oriented poly(ethylene terephthalate) film is ink jet printed with an image with a NUR TEMPO Modular Flatbed Inkjet Press (NUR Microprinters, Monnachie, NJ) equipped with a UV curing lamp on the print heads and utilizing a pigmented 6-color CMYK + lclm UV-curable inkset and a UV-curable white ink available from NUR Microprinters to provide a ink coverage of 400 %. The tape and polyester film are removed to provide the image-bearing Butacite® sheet.

A solution of SILQUEST A-1100 silane (0.025 weight % based on the total weight of the solution) (GE Silicones) (believed to be gammaaminopropyltrimethoxysilane), isopropanol (66.65 weight % based on the total weight of the solution), and water (33.32 weight % based on the total weight of the solution) is prepared and allowed to sit for at least one hour prior to use. A 12-inch by 12-inch piece of the image-bearing Butacite® interlayer is dipped into the silane solution (residence time of about 1 minute), removed and allowed to drain and dry under ambient conditions.

A glass laminate composed of a glass layer, the silane-primed image-bearing Butacite® interlayer, the white sheet from Preparative Example PE 4, and a glass layer is produced in the following manner. The silane-primed, image-bearing Butacite® interlayer (12 inches by 12 inches (305 mm X 305 mm)) and the white sheet from Preparative Example PE 4 (12 inches by 12 inches (305 mm X 305 mm) by 15 mils thick (0.38 mm)) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Butacite® interlayer, the white sheet layer (with the image-bearing surface of the primed, image-bearing Butacite® interlayer in contact with the surface of the white sheet layer) and a clear annealed float glass plate layer (12 inches by 12 inches (305 mm X 305 mm) by 2.5 mm thick). The glass/interlayer/glass assembly is then laminated as described for Example 1.

### Example 12

Using the above mentioned ink set of Example 1, a 30 mils thick (0.75 mm) Butacite® poly(vinyl butyral) sheet (DuPont) is ink jet printed with an image with an Epson 3000 printer to provide an ink coverage of 175 %.

A solution of SILQUEST A-1100 silane (0.05 weight % based on the total weight of the solution) (GE Silicones) (believed to be gammaaminopropyltrimethoxysilane), isopropanol (66.65 weight % based on the total weight of the solution), and water (33.32 weight % based on the total weight of the solution) is prepared and allowed to sit for at least one hour prior to use. A 12-inch by 12-inch piece of the image-bearing Butacite® interlayer is dipped into the silane solution (residence time of about 1 minute), removed and allowed to drain and dry under ambient conditions.

A glass laminate composed of a glass layer, the silane-primed, image-bearing Butacite® interlayer and a Melinex® 377 film layer (DuPont Teijin Films Company) is produced in the following manner. The primed, image-bearing Butacite® interlayer (12 inches by 12 inches (305 mm X 305 mm)) and the Melinex® 377 white film (12 inches by 12 inches (305 mm X 305 mm)) are conditioned at 23 % relative humidity (RH) at a temperature of 72 degrees F overnight. The sample is laid up with a clear annealed float glass plate layer (12 inches by 12 inches (305 mm X 305 mm) by 3 mm thick), the primed, image-bearing Butacite® interlayer, the white film layer, a thin Teflon® film layer (12 inches by 12 inches (305 mm X 305 mm) (DuPont), and a clear annealed float glass cover plate layer (12 inches by 12 inches (305 mm X 305 mm) by 3 mm thick). The glass/image-bearing interlayer/white film/Teflon® film/glass assembly is then laminated as described for Example 1. Removal of the Teflon® film and the backing glass layer provides the desired glass/interlayer/white film laminate.

### Example 13

A Butacite® poly(vinyl butyral) sheet (12-inch by 12 inch (305 mm X 305 mm) by 30 mils (0.75 mm) thick) is ink jet printed with an image with a NUR TEMPO Modular Flatbed Inkjet Press (NUR Microprinters, Monnachie, NJ) equipped with a UV curing lamp on the print heads and utilizing a pigmented 6-color CMYK + lclm UV-curable inkset and a UV-curable white ink available from NUR Microprinters to provide an ink coverage of 300 %.

A solution of SILQUEST A-1100 silane (0.025 weight % based on the total weight of the solution) (GE Silicones) (believed to be gammaaminopropyltrimethoxysilane), isopropanol (66.65 weight % based on the total weight of the solution), and water (33.32 weight % based on the total weight of the solution) is prepared and allowed to sit for at least one hour prior to use. A 12-inch by 12-inch piece of the image-bearing Butacite® interlayer is dipped into the silane solution (residence time of about 1 minute), removed and allowed to drain and dry under ambient conditions.

A glass laminate composed of a glass layer, the silane-primed, image-bearing Butacite® interlayer and a Melinex® DTM White film layer (DuPont Teijin Films Company) is produced in the following manner. The silane-primed, image-bearing Butacite® interlayer (12 inches by 12 inches (305 mm X 305 mm)) and the Melinex® DTM White film (12 inches by 12 inches (305 mm X 305 mm) by 5 mils thick (0.13 mm)) are conditioned at 23 % relative humidity (RH) at a temperature of 72 degrees F overnight. The sample is laid up with a clear annealed float glass plate layer (12 inches by 12 inches (305 mm X 305 mm) by 3 mm thick), the primed, image-bearing Butacite® interlayer, the white film layer, a thin Teflon® film layer (12 inches by 12 inches (305 mm X 305 mm) (DuPont), and a clear annealed float glass cover plate layer (12 inches by 12 inches (305 mm X 305 mm) by 3 mm thick). The glass/interlayer/white film/Teflon® film/glass assembly is then laminated as described for Example 1. Removal of the Teflon® film and the backing glass layer provides the desired glass/interlayer/white film laminate.

### Example 14

Using the above mentioned ink set of Example 1, a 30 mils thick (0.75 mm) Butacite® poly(vinyl butyral) sheet (DuPont) is ink jet printed with an image with an Epson 3000 printer to provide an ink coverage of 300 percent.

The image-bearing surface is coated with a 0.5 weight % aqueous solution of poly(vinyl amine) with a # 8 casting rod and is dried under ambient conditions.

A glass laminate composed of a glass layer, the primed, image-bearing Butacite® interlayer and a Melinex® White-Light Block film grade 6368 layer (DuPont Teijin Films Company) is produced in the following manner. The primed, image-bearing Butacite® interlayer (12 inches by 12 inches (305 mm X 305 mm)) and the Melinex® White-Light Block film grade 6368 (12 inches by 12 inches (305 mm X 305 mm)) are conditioned at 23 % relative humidity (RH) at a temperature of 72 degrees F overnight. The sample is laid up with a clear annealed float glass plate layer (12 inches by 12 inches (305 mm X 305 mm) by 3 mm thick), the primed, image-bearing Butacite® interlayer, the white film layer, a thin Teflon® film layer (12 inches by 12 inches (305 mm X 305 mm) (DuPont) and a clear annealed float glass cover plate layer (12 inches by 12 inches (305 mm X 305 mm) by 3 mm thick). The glass/image-bearing interlayer/white film/Teflon® film/glass assembly is then laminated as described for Example 1. Removal of the Teflon® film and the backing glass layer provides the desired glass/interlayer/white film laminate.

### Example 15

A Butacite® poly(vinyl butyral) sheet (12-inch by 12 inch (305 mm X 305 mm) by 15 mils (0.38 mm) thick) (DuPont) taped to a 6 mils (0.15 mm) thick biaxially-oriented poly(ethylene terephthalate) film is ink jet printed with an image with a NUR TEMPO Modular Flatbed Inkjet Press (NUR Microprinters, Monnachie, NJ) equipped with a UV curing lamp on the print heads and utilizing a pigmented 6-color CMYK + lclm UV-curable inkset and a UV-curable white ink available from NUR Microprinters to provide an ink coverage of 450 %. The tape and polyester film are removed to provide the image-bearing Butacite® sheet.

A solution of SILQUEST A-1100 silane (0.025 weight % based on the total weight of the solution) (GE Silicones) (believed to be gammaaminopropyltrimethoxysilane), isopropanol (66.65 weight % based on the total weight of the solution), and water (33.32 weight % based on the total weight of the solution) is prepared and allowed to sit for at least one hour prior to use. A 12-inch by 12-inch piece of the image-bearing Butacite® interlayer is dipped into the silane solution (residence time of about 1 minute), removed and allowed to drain and dry under ambient conditions.

A glass laminate composed of a glass layer, the silane-primed, image-bearing Butacite® interlayer, a Butacite® poly(vinyl butyral) interlayer and a Melinex® 226/227 film layer (DuPont Teijin Films Company) is produced in the following manner. The silane-primed, image-bearing Butacite® interlayer (12 inches by 12 inches (305 mm X 305 mm)), the Butacite® interlayer (12 inches by 12 inches (305 mm X 305 mm) by 15 mils thick (0.38 mm)) and the Melinex® 226/227 white film (12 inches by 12 inches (305 mm X 305 mm) by 5 mils thick (0.13 mm)) are conditioned at 23 % relative humidity (RH) at a temperature of 72 degrees F overnight. The sample is laid up with a clear annealed float glass plate layer (12 inches by 12 inches (305 mm X 305 mm) by 3 mm thick), the primed, image-bearing Butacite® interlayer, the Butacite® interlayer (with the image-bearing surface of the primed, image-bearing Butacite® sheet layer in contact with the surface of the Butacite® interlayer), the white film layer, a thin Teflon® film layer (12 inches by 12 inches (305 mm X 305 mm) (DuPont) and a clear annealed float glass cover plate layer (12 inches by 12 inches (305 mm X 305 mm) by 3 mm thick). The glass/image-bearing interlayer/interlayer/white film/Teflon® film/glass assembly is then laminated as described for Example 1. Removal of the Teflon® film and the backing glass layer provides the desired glass/interlayer/white film laminate.

### Example 16

A Evasafe® ethylene vinyl acetate sheet (12-inch by 12 inch (305 mm X 305 mm) by 15 mils (0.38 mm) thick) (Bridgestone Company) taped to a 6 mils (0.15 mm) thick biaxially-oriented poly(ethylene terephthalate) film is ink jet printed with an image with a NUR TEMPO Modular Flatbed Inkjet Press (NUR Microprinters, Monnachie, NJ) equipped with a UV curing lamp on the print heads and utilizing a pigmented 6-color CMYK + lclm UV-curable inkset and a UV-curable white ink available from NUR Microprinters to provide an ink coverage of 350 %. The tape and polyester film are removed to provide the image-bearing Evasafe® sheet.

A solution of SILQUEST A-1100 silane (0.025 weight % based on the total weight of the solution) (GE Silicones) (believed to be gammaaminopropyltrimethoxysilane), isopropanol (66.65 weight % based on the total weight of the solution), and water (33.32 weight % based on the total weight of the solution) is prepared and allowed to sit for at least one hour prior to use. A 12-inch by 12-inch piece of the image-bearing Evasafe® interlayer is dipped into the silane solution (residence time of about 1 minute), removed and allowed to drain and dry under ambient conditions.

A glass laminate composed of a glass layer, the silane-primed, image-bearing Evasafe® interlayer, a Melinex® DTM White film layer (DuPont Teijin Films Company), an Evasafe® ethylene vinyl acetate interlayer and a glass layer is produced in the following manner. The sample is laid up with a clear annealed float glass plate layer (12 inches by 12 inches (305 mm X 305 mm) by 2.5 mm thick), the primed, image-bearing Evasafe® interlayer (12 inches by 12 inches (305 mm X 305 mm)), the Melinex® DTM White film layer (12 inches by 12 inches (305 mm X 305 mm) by 5 mils (0.13 mm) thick), the Evasafe® interlayer (12 inches by 12 inches (305 mm X 305 mm) by 15 mils (0.38 mm) thick) and a clear annealed float glass plate layer (12 inches by 12 inches (305 mm X 305 mm) by 2.5 mm thick). The glass/interlayer/glass assembly is then laminated as described in Example 1.

### Example 17

Using the above mentioned ink set of Example 1, a 30 mils thick (0.75 mm) Evasafe® ethylene vinyl acetate sheet (Bridgestone Company) is ink jet printed with an image with an Epson 3000 printer to provide an ink coverage of 200 %.

The image-bearing surface is coated with a 0.5 weight % aqueous solution of poly(vinyl amine) with a # 8 casting rod and is dried under ambient conditions.

A glass laminate composed of a glass layer, the primed, image-bearing Evasafe® interlayer and a Melinex® 226/227 white film layer (DuPont Teijin Films Company) is produced in the following manner. The primed, image-bearing Evasafe® interlayer (12 inches by 12 inches (305 mm X 305 mm)) and the Melinex® 226/227 white film (12 inches by 12 inches (305 mm X 305 mm) by 5 mils thick (0.13 mm)) are conditioned at 23 % relative humidity (RH) at a temperature of 72 degrees F overnight. The sample is laid up with a clear annealed float glass plate layer (12 inches by 12 inches (305 mm X 305 mm) by 3 mm thick), the primed, image-bearing Evasafe® interlayer, the white film layer, a thin Teflon® film layer (12 inches by 12 inches (305 mm X 305 mm) (DuPont), and a clear annealed float glass cover plate layer (12 inches by 12 inches (305 mm X 305 mm) by 3 mm thick). The glass/interlayer/white film/Teflon® film/glass assembly is then laminated as described for Example 1. Removal of the Teflon® film and the backing glass layer provides the desired glass/interlayer/white film laminate.

### Example 18

Using the above mentioned ink set of Example 1, a 15 mils thick (0.38 mm) Evasafe® ethylene vinyl acetate sheet (Bridgestone Company) is ink jet printed with an image with an Epson 3000 printer to provide an ink coverage of 300 %.

A solution of SILQUEST A-1100 silane (0.025 weight % based on the total weight of the solution) (GE Silicones) (believed to be gammaaminopropyltrimethoxysilane), isopropanol (66.65 weight % based on the total weight of the solution), and water (33.32 weight % based on the total weight of the solution) is prepared and allowed to sit for at least one hour prior to use. A 12-inch by 12-inch piece of the image-bearing Evasafe® interlayer is dipped into the silane solution (residence time of about 1 minute), removed and allowed to drain and dry under ambient conditions.

A glass laminate composed of a glass layer, the silane-primed, image-bearing Evasafe® interlayer, an Evasafe® ethylene vinyl acetate interlayer and a Melinex® 329 white film layer (DuPont Teijin Films Company) is produced in the following manner. The primed, image-bearing Evasafe® interlayer (12 inches by 12 inches (305 mm X 305 mm)), the Evasafe® interlayer (12 inches by 12 inches (305 mm X 305 mm) by 15 mils thick (0.38 mm)) and the Melinex® 329 white film (12 inches by 12 inches (305 mm X 305 mm) by 4 mils thick (0.10 mm)) are conditioned at 23 % relative humidity (RH) at a temperature of 72 degrees F overnight. The sample is laid up with a clear annealed float glass plate layer (12 inches by 12 inches (305 mm X 305 mm) by 2.5 mm thick), the primed, image-bearing Evasafe® interlayer, the Evasafe® interlayer (with the image-bearing surface of the primed, image-bearing Evasafe® interlayer in contact with the surface of the Evasafe® interlayer), the white film layer, a thin Teflon® film layer (12 inches by 12 inches (305 mm X 305 mm) (DuPont) and a clear annealed float glass cover plate layer, (12 inches by 12 inches (305 mm X 305 mm) by 3 mm thick). The glass/interlayer/white film/Teflon® film/glass assembly is then laminated as described for Example 1. Removal of the Teflon® film and the backing glass layer provides the desired glass/interlayer/white film laminate.

While certain of the preferred embodiments of the present invention have been described and specifically exemplified above, it is not intended that the invention be limited to such embodiments. Various modifications may be made without departing from the scope of the claims.

## Claims

1. An image-bearing article comprising an interlayer, an opaque layer and a coating of an adhesive or of an adhesion promoter, wherein the coating is applied over at least a portion of the image, wherein the interlayer bears an image and is selected from the group consisting of poly(ethylene-co-vinyl acetate) and poly(vinyl butyral) interlayers, and wherein the image-bearing article is a laminate article.

2. The image-bearing article of claim 1 wherein the interlayer comprises poly(vinyl butyral).

3. The image-bearing article of claim 1 or 2 wherein the adhesion promoter is selected from the group consisting of silane and poly(alkyl amine) adhesion promoters, and mixtures thereof.

4. The image-bearing article of any preceding claim wherein the adhesion promoter comprises one or more of an aminosilane, a poly(vinyl amine), and a poly(allyl amine).

5. The image-bearing article of any preceding claim wherein the adhesion promoter is selected from the group consisting of vinyltriethoxysilane, vinyltrimethoxysilane, vinyltris(beta-methoxyethoxy)silane, gammamethacryloxypropyltrimethoxysilane, beta-(3,4-epoxycyclohexyl)ethyltrimethoxysilane, gammaglycidoxypropyltrimethoxysilane, gammaglycidoxypropylmethyldiethoxysilane, vinyt-triacetoxysilane, gammamercaptopropyltrimethoxysilane, (3-aminopropyl)trimethoxysilane, (3-minopropyl)triethoxysilane, N-beta-(aminoethyl)-gamma-aminopropyltrimethoxysilane, N-(beta-aminoethyl) gammaaminopropylmethyldimethoxysilane, aminoethylaminopropyl silane triol homopolymer, vinylbenzylaminoethylaminopropyltrimethoxysilane, bis(trimethoxysilylpropyl)amine, gamma-aminopropyltriethoxysilane, and N-beta-(aminoethyl)-gamma-aminopropyl-trimethoxysilane and mixtures thereof.

6. The image-bearing article of any preceding claim wherein the opaque layer is a white layer, preferably selected from the group consisting of white film, white sheet, white rigid sheet, frosted glass sheet, and etched glass sheet.

7. The image-bearing article of any preceding claim wherein the coating has a thickness of less than 1 mil.

8. The image-bearing article of any preceding claim wherein the image is applied through an ink jet printing process, or
wherein the image comprises a UV-curable ink, or wherein the image comprises a pigment ink, preferably comprising pigments selected from the group consisting of Color Index PY120, PY155, PY128, PY180, PY95, PY93, PV19/PR202, PB15:3, PB15:4, PR122, PB17 and mixtures thereof, or wherein the image comprises a black ink or a white ink, or wherein the image is formed from solvent-based ink.

9. The image-bearing article of any preceding claim further comprising a rigid sheet selected from the group consisting of glass, poly(carbonate), and poly(methacrylate) sheets laminated to the image-bearing interlayer.

10. The image-bearing article of any preceding claim further comprising a rigid sheet selected from the group consisting of glass, poly(carbonate), and poly(methacrylate) sheets, and wherein the rigid sheet is in contact with the adhesion promoter.

11. The image-bearing article of any preceding claim further comprising a second polymeric interlayer sheet selected from the group consisting of poly(vinyl butyral) sheets and poty(ethylene-co-vinyl acetate) sheets.

12. The image-bearing article of any preceding claim with a laminate adhesive strength of about 1000 psi or greater.

13. The image-bearing article of claim 11 further comprising a second rigid sheet laminated to the second interlayer sheet.

14. An image-bearing article comprising:
(a) a first rigid sheet, wherein the rigid sheet is selected from the group consisting of glass, poly(carbonate), and poly(methacrylate) sheets;
(b) a first polymeric interlayer sheet bearing an image which is coated on the image-bearing side and over the image with an adhesion promoter selected from the group consisting of aminosilane, poly(vinyl amine), poly(allyl amine) and mixtures thereof, wherein the polymeric interlayer sheet is selected from the group consisting of poly(vinyl butyral) sheets and poly(ethylene-co-vinyl acetate) sheets laminated to the rigid sheet;
(c) a white layer laminated to the image-bearing polymeric interlayer, wherein the white layer is selected from the group consisting of white film, white sheet, white rigid sheet, frosted glass sheet, and etched glass sheet;
(d) A second polymeric interlayer sheet laminated to the white layer, wherein the polymeric interlayer sheet is selected from the group consisting of poly(vinyl butyral) and poly(ethylene-co-vinyl acetate); and
(e) a second rigid sheet laminated to the polymeric interlayer sheet, wherein the second rigid sheet is selected from the group consisting of glass, poly(carbonate), and poly(methacrylate) sheets.

15. An image-bearing article comprising:
(a) a rigid sheet, wherein the rigid sheet is selected from the group consisting of glass, poly(carbonate), and poly(methacrylate) sheets;
(b) a polymeric interlayer sheet bearing an image which is coated on the image-bearing side and over the image with an adhesion promoter selected from the group consisting of aminosilane, poly(vinyl amine), poly(allyl amine) and mixtures thereof, wherein the polymeric interlayer sheet is selected from the group consisting of poly(vinyl butyral) sheets and poiy(ethylene-co-vinyl acetate) sheets laminated to the rigid sheet; and
(c) a white layer laminated to the image-bearing polymeric interlayer, wherein the white layer is selected from the group consisting of white film, white sheet, white rigid sheet, frosted glass sheet, and etched glass sheet.

## Patentansprüche

1. Bildtragender Artikel umfassend eine Zwischenschicht, eine opake Schicht und eine Beschichtung aus einem Klebstoff oder einem Haftungspromotor, wobei die Beschichtung über mindestens einem Teil des Bilds aufgebracht ist, wobei die Zwischenschicht ein Bild trägt und aus der Gruppe ausgewählt ist bestehend aus Poly(ethylen-co-vinylactat)- und Poly(vinylbutyral-) Zwischenschichten und wobei der bildtragende Artikel ein Laminatartikel ist.

2. Bildtragender Artikel nach Anspruch 1, wobei die Zwischenschicht Poly(vinylbutyral) umfasst.

3. Bildtragender Artikel nach Anspruch 1 oder 2, wobei der Haftungspromotor aus der Gruppe ausgewählt ist bestehend aus Silan- und Poly(alkylamin-) Haftungspromotoren und Mischungen davon.

4. Bildtragender Artikel nach einem der vorhergehenden Ansprüche, wobei der Haftungspromotor eines oder mehrere von einem Aminosilan, einem Poly(vinylamin) und einem Poly(allylamin) umfasst.

5. Bildtragender Artikel nach einem der vorhergehenden Ansprüche, wobei der Haftungspromotor aus der Gruppe ausgewählt ist bestehend aus Vinyltriethoxysilan, Vinyltrimethoxysilan, Vinyltris(beta-methoxyethoxy)silan, GammaMethacryloxypropyltrimethoxysilan, Beta-(3,4-Epoxycyclohexyl)ethyltrimethoxysilan, Gamma-Glycidoxypropyltrimethoxysilan, Gamma-Glycidoxypropyhnethyldiethoxysilan, Vinyltriacetoxysilan, Gamma-Mercaptopropyltrimethoxysilan, (3-Aminopropyl)trimethoxysilan, (3-Aminopropyl)triethoxysilan, N-Beta-(Aminoethyl)-gamma-aminopropyltrimethoxysilan, N-(Beta-Aminoethyl)-gammaaminopropylmethyldimethoxysilan, Aminoethylaminopropylsilantriol-Homopolymer, Vinylbenzylaminoethylaminopropyltrimethoxysilan, Bis(trimethoxysilylpropyl)amin, Gamma-Aminopropyltriethoxysilan und N-Beta-(Aminoethyl)-gammaaminopropyltrimethoxysilan und Mischungen davon.

6. Bildtragender Artikel nach einem der vorhergehenden Ansprüche, wobei die opake Schicht eine weiße Schicht ist, die bevorzugt aus der Gruppe ausgewählt ist bestehend aus weißer Folie, weißer Platte, weißer steifer Platte, Milchglasplatte und geätzter Glasplatte.

7. Bildtragender Artikel nach einem der vorhergehenden Ansprüche, wobei die Beschichtung eine Dicke von weniger als 1 mil aufweist.

8. Bildtragender Artikel nach einem der vorhergehenden Ansprüche, wobei das Bild durch ein Tintenstrahldruckverfahren aufgebracht wird oder wobei das Bild eine UVaushärtbare Tinte umfasst oder wobei das Bild eine Pigmenttinte umfasst, die bevorzugt Pigmente umfasst ausgewählt aus der Gruppe bestehend aus Farbindex PY120, PY155, PY128, PY180, PY95, PY93, PV19/PR202, PB15:3, PB15:4, PR122, PB17 und Mischungen davon oder wobei das Bild eine schwarze oder eine weiße Tinte umfasst oder wobei das Bild aus Tinte auf Lösungsmittelbasis gebildet ist.

9. Bildtragender Artikel nach einem der vorhergehenden Ansprüche, des Weiteren eine steife Platte umfassend ausgewählt aus der Gruppe bestehend aus Glas-, Poly(carbonat-) und Poly(methacrylat-) Platten, die auf die bildtragende Zwischenschicht laminiert sind.

10. Bildtragender Artikel nach einem der vorhergehenden Ansprüche, des Weiteren eine steife Platte umfassend ausgewählt aus der Gruppe bestehend aus Glas-, Poly(carbonat-) und Poly(methacrylat-) Platten, und wobei die steife Platte in Kontakt mit dem Haftungspromotor steht.

11. Bildtragender Artikel nach einem der vorhergehenden Ansprüche, des Weiteren eine zweite polymere Zwischenschichtplatte umfassend ausgewählt aus der Gruppe bestehend aus Poly(vinylbutyral-) Platten und Poly(ethylen-co-vinylacetat-) Platten.

12. Bildtragender Artikel nach einem der vorhergehenden Ansprüche mit einer Laminathaftfestigkeit von etwa 1000 psi oder mehr.

13. Bildtragender Artikel nach Anspruch 11, des Weiteren eine zweite steife Platte umfassend, die auf die zweite Zwischenschichtplatte laminiert ist.

14. Bildtragender Artikel umfassend:
(a) eine erste steife Platte, wobei die steife Platte aus der Gruppe ausgewählt ist bestehend aus Glas-, Poly(carbonat-) und Poly(methacrylat-) Platten;
(b) eine erste polymere Zwischenschichtplatte, die ein Bild trägt und auf der bildtragende Seite und über dem Bild mit einem Haftpromotor beschichtet ist, der aus der Gruppe ausgewählt ist bestehend aus Aminosilan, Poly(vinylamin), Poly(allylamin) und Mischungen davon, wobei die polymere Zwischenschichtplatte aus der Gruppe ausgewählt ist bestehend aus Poly(vinylbutyral-) Platten und Poly(ethylen-co-vinylacetat-) Platten, die auf die steife Platte laminiert sind;
(c) eine weiße Schicht, die auf die bildtragende polymere Zwischenschicht laminiert ist, wobei die weiße Schicht aus der Gruppe ausgewählt ist bestehend aus weißer Folie, weißer Platte, weißer steifer Platte, Milchglasplatte und geätzter Glasplatte;
(d) eine zweite polymere Zwischenschichtplatte, die die auf die weiße Schicht laminiert ist, wobei die polymere Zwischenschichtplatte aus der Gruppe ausgewählt ist bestehend aus Poly(vinylbutyral-) und Poly(ethylen-co-vinylacetat-) Platten und
(e) einer zweiten steifen Platte, die die auf die polymere Zwischenschichtplatte laminiert ist, wobei die zweite steife Platte aus der Gruppe ausgewählt ist bestehend aus Glas-, Poly(carbonat-) und Poly(methacrylat-) Platten.

15. Bildtragender Artikel umfassend:
(a) eine steife Platte, wobei die steife Platte aus der Gruppe ausgewählt ist bestehend aus Glas-, Poly(carbonat-) und Poly(methacrylat-) Platten;
(b) eine polymere Zwischenschichtplatte, die ein Bild trägt und auf der bildtragende Seite und über dem Bild mit einem Haftpromotor beschichtet ist, der aus der Gruppe ausgewählt ist bestehend aus Aminosilan, Poly(vinylamin), Poly(allylamin) und Mischungen davon, wobei die polymere Zwischenschichtplatte aus der Gruppe ausgewählt ist bestehend aus Poly(vinylbutyral-) Platten und Poly(ethylen-co-vinylacetat-) Platten, die auf die steife Platte laminiert sind;
(c) eine weiße Schicht, die auf die bildtragende polymere Zwischenschicht laminiert ist, wobei die weiße Schicht aus der Gruppe ausgewählt ist bestehend aus weißer Folie, weißer Platte, weißer steifer Platte, Milchglasplatte und geätzter Glasplatte.

## Revendications

1. Article comportant une image, comprenant une couche intermédiaire, une couche opaque, et un revêtement composé d'un adhésif ou d'un promoteur d'adhérence, ledit revêtement étant appliqué sur au moins une partie de l'image, dans lequel la couche intermédiaire comporte une image et est choisie dans le groupe constitué des couches intermédiaires de poly(éthylène-co-acétate de vinyle) et de poly(vinylbutyral), et dans lequel l'article comportant une image est un article stratifié.

2. Article comportant une image selon la revendication 1 dans lequel la couche intermédiaire comprend du poly(vinylbutyral).

3. Article comportant une image selon la revendication 1 ou 2 dans lequel le promoteur d'adhérence est choisi dans le groupe constitué des promoteurs d'adhérence de type silane et poly(alkylamine), et leurs mélanges.

4. Article comportant une image selon l'une quelconque des revendications précédentes dans lequel le promoteur d'adhérence comprend un ou plusieurs composés choisis parmi un aminosilane, une poly(vinylamine), et une poly(allylamine).

5. Article comportant une image selon l'une quelconque des revendications précédentes dans lequel le promoteur d'adhérence est choisi dans le groupe constitué du vinyltriéthoxysilane, du vinyltriméthoxysilane, du vinyltris(bêta-méthoxyéthoxy)silane, du gamma-méthacryloxypropyltriméthoxysilane, du bêta-(3,4-époxycyclohexyl)éthyltriméthoxysilane, du gamma-glycidoxypropyltriméthoxysilane, du gamma-glycidoxypropylméthyldiéthoxysilane, du vinyl-triacétoxysilane, du gammamercaptopropyltriméthoxysilane, du (3-aminopropyl)triméthoxysilane, du (3-aminopropyl)triéthoxysilane, du N-bêta-(aminoéthyl)-gamma-aminopropyltriméthoxysilane, du N-(bêta-aminoéthyl)-gamma-aminopropyhnéthyldiméthoxysilane, d'un homopolymère d'aminoéthylaminopropylsilane triol, du vinylbenzylaminoéthylaminopropyltriméthoxysilane, de la bis(triméthoxysilylpropyl)amine, du gamma-aminopropyltriéthoxysilane, et du N-bêta-(aminoéthyl)-gamma-aminopropyl-triméthoxysilane et leurs mélanges.

6. Article comportant une image selon l'une quelconque des revendications précédentes dans lequel la couche opaque est une couche blanche, de préférence choisie dans le groupe constitué d'un film blanc, d'une feuille blanche, d'une feuille rigide blanche, d'une feuille de verre dépoli, et d'une feuille de verre gravé.

7. Article comportant une image selon l'une quelconque des revendications précédentes dans lequel le revêtement a une épaisseur inférieure à 1 millième de pouce.

8. Article comportant une image selon l'une quelconque des revendications précédentes dans lequel l'image est appliquée par un procédé d'impression par jet d'encre, ou dans lequel l'image comprend une encre polymérisable aux UV, ou dans lequel l'image groupe constitué des Color Index PY120, PY155, PY128, PY180, PY95, PY93, PV19/PR202, PB15:3, PB15:4, PR122, PB17 et leurs mélanges, ou dans lequel l'image comprend une encre noire ou une encre blanche, ou dans lequel l'image est formée à partir d'une encre à base de solvant.

9. Article comportant une image selon l'une quelconque des revendications précédentes, comprenant en outre une feuille rigide choisie dans le groupe constitué des feuilles de verre, de poly(carbonate), et de poly(méthacrylate) stratifiées sur la couche intermédiaire comportant une image.

10. Article comportant une image selon l'une quelconque des revendications précédentes, comprenant en outre une feuille rigide choisie dans le groupe constitué des feuilles de verre, de poly(carbonate), et de poly(méthacrylate), la feuille rigide étant en contact avec le promoteur d'adhérence.

11. Article comportant une image selon l'une quelconque des revendications précédentes, comprenant une seconde feuille de couche intermédiaire polymère choisie dans le groupe constitué des feuilles de poly(vinylbutyral) et des feuilles de poly(éthylène-co-acétate de vinyle).

12. Article comportant une image selon l'une quelconque des revendications précédentes présentant une force adhésive du stratifié supérieure ou égale à environ 1000 psi.

13. Article comportant une image selon la revendication 11 comprenant en outre une seconde feuille rigide stratifiée sur la seconde feuille de couche intermédiaire.

14. Article comportant une image, comprenant:
(a) une première feuille rigide, ladite feuille rigide étant choisie dans le groupe constitué des feuilles de verre, de poly(carbonate), et de poly(méthacrylate);
(b) une première feuille de couche intermédiaire polymère comportant une image, qui est revêtue, sur la face portant l'image et par-dessus l'image, d'un promoteur d'adhérence choisi dans le groupe constitué d'un aminosilane, d'une poly(vinylamine), d'une poly(allylamine) et de leurs mélanges, ladite feuille de couche intermédiaire polymère étant choisie dans le groupe constitué des feuilles de poly(vinylbutyral) et des feuilles de poly(éthylène-co-acétate de vinyle) stratifiées sur la feuille rigide;
(c) une couche blanche stratifiée sur la couche intermédiaire polymère comportant une image, ladite couche blanche étant choisie dans le groupe constitué d'un film blanc, d'une feuille blanche, d'une feuille rigide blanche, d'une feuille de verre dépoli, et d'une feuille de verre gravé;
(d) une seconde feuille de couche intermédiaire polymère stratifiée sur la couche blanche, ladite feuille de couche intermédiaire polymère étant choisie dans le groupe constitué du poly(vinylbutyral) et du poly(éthylène-co-acétate de vinyle); et
(e) une seconde feuille rigide stratifiée sur la feuille de couche intermédiaire polymère, ladite seconde feuille rigide étant choisie dans le groupe constitué des feuilles de verre, de poly(carbonate), et de poly(méthacrylate).

15. Article comportant une image, comprenant:
(a) une feuille rigide, ladite feuille rigide étant choisie dans le groupe constitué des feuilles de verre, de poly(carbonate), et de poly(méthacrylate);
(b) une feuille de couche intermédiaire polymère comportant une image, qui est revêtue, sur la face portant l'image et par-dessus l'image, d'un promoteur d'adhérence choisi dans le groupe constitué d'un aminosilane, d'une poly(vinylamine), d'une poly(allylamine) et de leurs mélanges, ladite feuille de couche intermédiaire polymère étant choisie dans le groupe constitué des feuilles de poly(vinylbutyral) et des feuilles de poly(éthylène-co-acétate de vinyle) stratifiées sur la feuille rigide; et
(c) une couche blanche stratifiée sur la couche intermédiaire polymère comportant une image, ladite couche blanche étant choisie dans le groupe constitué d'un film blanc, d'une feuille blanche, d'une feuille rigide blanche, d'une feuille de verre dépoli, et d'une feuille de verre gravé.
